# EUROPÄISCHE PATENTSCHRIFT

(11) **EP 3 616 496 B1**
(45) Veröffentlichungstag und Bekanntmachung des Hinweises auf die Patenterteilung: **09.08.2023**
(21) Anmeldenummer: 19178626.8
(22) Anmeldetag: 06.06.2019
(51) Int. Cl.: A01D 41/127

(54) **LANDWIRTSCHAFTLICHE ARBEITSMASCHINE**
AGRICULTURAL MACHINE
ENGIN DE TRAVAIL AGRICOLE

(30) Priorität: 29.08.2018 DE 102018121031
(43) Veröffentlichungstag der Anmeldung: 04.03.2020
(73) Patentinhaber: CLAAS Selbstfahrende Erntemaschinen GmbH, 33428 Harsewinkel (DE)
(72) Erfinder: Barther, Marvin, 33161 Hövelhof (DE); Neitemeier, Dennis, 59510 Lippetal (DE); Fischer, Frédéric, 59823 Arnsberg (DE); Kettelhoit, Boris, 33335 Gütersloh (DE)
(74) Vertreter: CLAAS Gruppe

(56) Entgegenhaltungen:
- EP-A1- 3 300 019
- EP-A1- 3 552 474
- DE-A1-102016 202 628

## Beschreibung

Die Erfindung betrifft eine landwirtschaftliche Arbeitsmaschine, insbesondere Erntemaschine, gemäß dem Oberbegriff von Anspruch 1 sowie ein Verfahren zum Betrieb einer landwirtschaftlichen Arbeitsmaschine gemäß dem Oberbegriff von Anspruch 22.

Landwirtschaftliche Arbeitsmaschinen, zu denen insbesondere selbstfahrende Erntemaschinen wie Mähdrescher und Feldhäcksler zählen, weisen regelmäßig als Vorsatzgerät eine Erntegutbergungsanordnung auf, mit der Erntegut im Feldbestand abgetrennt und zur weiteren Verarbeitung im Mähdrescher aufgenommen werden kann. Eine Erntegutbergungsanordnung ihrerseits weist regelmäßig eine Vielzahl von einzelnen Komponenten auf, welche mit unterschiedlichen Parametern betrieben werden können. Beispiele für solche Komponenten sind bei einem Mähdrescher eine Erntegutaufnahmevorrichtung in Form einer Haspel, eine Erntegutschneidvorrichtung in Form eines Schneidwerkstisches mit einem Messerbalken, eine Erntegutfördervorrichtung in Form einer Förderschnecke, insbesondere Querförderschnecke, und eine Ernteguteinzugsvorrichtung in Form eines Schrägförderers. Bei einem Mähdrescher kann beispielsweise die Lage (Schnitthöhe, Position) und Drehzahl der Haspel sowie die Geschwindigkeit der Querförderschnecke und des Schrägförderers eingestellt werden. Auf diese Weise lässt sich der Erntegutstrom innerhalb der Erntegutbergungsanordnung beeinflussen. Weiteren Einfluss auf den Erntegutstrom innerhalb der Erntegutbergungsanordnung hat die Fahrgeschwindigkeit der Erntemaschine, da auf diese Weise die aufgenommene Erntegutmenge beeinflusst wird, die von der Erntegutbergungsanordnung verarbeitet wird.

Trotz einer Reihe von automatischen Einstellungen der Erntegutbergungsanordnung muss der Fahrer der landwirtschaftlichen Arbeitsmaschine dauerhaft den Erntegutstrom sowohl innerhalb der Erntegutbergungsanordnung als auch innerhalb des Mähdreschers im Übrigen überwachen. Er muss beispielsweise darauf achten, dass eine möglichst gleichmäßige Gutflussgeschwindigkeit innerhalb des Vorsatzgeräts und dem weiteren Verlauf innerhalb des Mähdreschers vorhanden ist, da bei einem ungleichmäßigen Gutfluss eventuell die Fahrzeuggeschwindigkeit und damit eine Erntegutaufnahme reduziert werden muss, um einen Gutstau zu vermeiden. Tritt ein Gutstau auf, muss der Erntevorgang abgebrochen und eine aufwendige Beseitigung des Gutsstaus im Vorsatzgerät bzw. im Mähdrescher im Übrigen vorgenommen werden. Die hierfür erforderliche Zeit beeinträchtigt die Wirtschaftlichkeit des Erntebetriebes signifikant.

Es ist daher gewünscht, eine Steuerung und/oder Regelung der Prozessabläufe in der landwirtschaftlichen Arbeitsmaschine, beispielsweise im Mähdrescher soweit wie möglich zu automatisieren und den Fahrer entsprechend zu entlasten. Dazu ist eine möglichst differenzierte Analyse der Prozessabläufe nötig, was schon mit den Prozessabläufen innerhalb des Vorsatzgeräts beginnt. Für eine optimale Analyse ist es wiederum nötig, den Erntegutstrom optimal zu überwachen und Veränderungen des Erntegutstroms, insbesondere der Gutgeschwindigkeit, möglichst frühzeitig zu erkennen und entsprechende Regelungsmaßnahmen auszuführen.

Zu diesem Zweck ist beispielsweise aus der EP 3 300 019 A1 bekannt, eine Regelungseinrichtung mit einer Sensoreinheit und einer Bildverarbeitungseinheit vorzusehen, über die anhand der Methode des optischen Flusses der Erntegutstrom überwacht wird. Die Sensoreinrichtung weist beispielsweise zwei Kameras auf, die von der Fahrerkabine auf die Erntegutbergungsanordnung gerichtet sind und dort einzelne Abschnitte der Komponenten und den Erntegutstrom umfassen. Die Sensoreinrichtung erzeugt eine Bildsequenz also eine Vielzahl aufeinanderfolgender Bilder. Jeweils zwei aufeinanderfolgende Bilder werden gemäß Stand der Technik zu einem Bildpaar gruppiert, wobei Positionsverschiebungen von Intensitätsmustern, das heißt von Pixeln oder Pixelgruppen, zwischen den Bildern des jeweiligen Bildpaares ermittelt werden. Die Intensitätsmuster werden dabei nicht zwingend von Objekten oder konkreten Erntegutmerkmalen gebildet, sondern allgemein von Pixeln oder Pixelgruppen im Bild, deren Position sich von dem einen Bild auf das nächste Bild ändert. Aus diesen Positionsverschiebungen der Intensitätsmuster lässt sich, wenn die Zeitspanne zwischen den Bildern des Bildpaares bekannt ist, auf die Geschwindigkeit schließen, mit denen sich die Intensitätsmuster fortbewegen. Die Geschwindigkeiten mehrerer Intensitätsmuster lassen sich für jedes Bildpaar und jede aus mehreren Bildpaaren bestehende Bildsequenz zu Geschwindigkeitskennfeldern zusammenfassen. Bei einem solchen Geschwindigkeitskennfeld spricht man auch vom optischen Fluss. Hinsichtlich der Methode des optischen Flusses und deren Anwendung zur Überwachung des Erntegutstroms innerhalb eines Vorsatzgeräts darf auf die EP 3 300 019 A1 verwiesen werden, die auf die Anmelderin zurückgeht. Eine Landwirtschaftliche Arbeitsmaschine der eingangs genannten Art ist auch aus der EP 3 552 474 A1 bekannt.

Eine Herausforderung ist es, den Erntegutstrom möglichst differenziert zu betrachten und zu analysieren, um sich rechtzeitig auf einen sich anbahnenden Gutstau reagieren zu können.

Der Erfindung liegt das Problem zugrunde, eine landwirtschaftliche Arbeitsmaschine derart auszugestalten und weiterzubilden, dass die Überwachung eines Vorsatzgeräts hinsichtlich der Genauigkeit, Zuverlässigkeit und Rechtzeitigkeit weiter verbessert wird. Das obige Problem wird bei einer landwirtschaftlichen Arbeitsmaschine gemäß dem Oberbegriff von Anspruch 1 durch die Merkmale des kennzeichnenden Teils von Anspruch 1 gelöst.

Wesentlich ist die grundsätzliche Überlegung, das Vorsatzgerät, insbesondere eine Erntegutbergungsanordnung eines Mähdreschers oder Feldhäckslers, sensorisch so zu erfassen, dass einzelne Bereiche im Vorsatzgerät und um das Vorsatzgerät erkannt, das heißt identifiziert, werden können. Bei den Bereichen handelt es sich zum einen um Regionen gleicher Charakteristik. Eine Region gleicher Charakteristik ist beispielsweise der nicht-abgeerntete Feldbestand in Fahrtrichtung vor dem Vorsatzgerät, eine weitere Region gleicher Charakteristik ist beispielsweise der abgeerntete Feldbestand (Stoppelfeld) hinter dem Vorsatzgerät. Auch Gutflussregionen gleicher Charakteristik können davon umfasst sein, wobei beispielsweise eine Region gleicher Charakteristik von dem Erntegutstrom innerhalb der Erntegutaufnahmevorrichtung, insbesondere Haspel, und eine andere Region gleicher Charakteristik von dem Erntegutstrom vertikal oberhalb der Erntegutschneidvorrichtung, insbesondere vertikal oberhalb des Schneidwerkstisches, insbesondere in dem Bereich zwischen der Erntegutaufnahmevorrichtung bzw. Haspel und der Erntegutfördervorrichtung, insbesondere Förderschnecke, gebildet wird.

Neben diesen Bereichen, die durch das Vorhandensein von überwiegend Biomasse (Erntegut, Feldbestand) innerhalb des Bereichs gekennzeichnet sind, handelt es sich bei weiteren Bereichen um Komponenten des Vorsatzgeräts, die über einen von der Sensoreinheit sensorisch erfassbaren Oberflächenabschnitt eines Maschinenteils der Komponente verfügen. Entsprechende Komponenten sind beispielsweise die Erntegutaufnahmevorrichtung, insbesondere Haspel, die Erntegutschneidvorrichtung, insbesondere der Schneidwerkstisch, die Erntegutfördervorrichtung, insbesondere Förderschnecke, und/oder die Ernteguteinzugsvorrichtung, insbesondere der Schrägförderer, einer Erntegutbergungsanordnung, beispielsweise eines Mähdreschers. Jeder dieser Bereiche wird dementsprechend durch das Vorhandensein eines Oberflächenabschnitts eines Maschinenteils einer Komponente des Vorsatzgeräts definiert.

Zusätzlich zu diesen Bereichen erfolgt vorschlagsgemäß eine Erkennung von Eigenschaften des Erntegutstroms, beispielsweise von Gutflussgeschwindigkeiten des Erntegutstroms oder Abschnitten davon und/oder einem Gutstau.

Auf Basis der in einem solchen Analyseprozess gesammelten Informationen werden dann vorschlagsgemäß in einem nachfolgenden oder gleichzeitig ablaufenden Steuerungs- und/oder Regelungsprozess Prozessabläufe in der landwirtschaftlichen Arbeitsmaschine gesteuert und/oder geregelt. Aufgrund der erfolgten Einteilung in Regionen und Komponenten lässt sich das Verhalten eines Vorsatzgeräts und des darin entlang geführten Erntegutstroms besonders differenziert betrachten und analysieren. Entsprechend wird die Überwachung eines Vorsatzgeräts, insbesondere einer Erntegutbergungsanordnung, hinsichtlich der Genauigkeit, Zuverlässigkeit und Rechtzeitigkeit weiter verbessert.

Vorschlagsgemäß ist nun vorgesehen, dass die Regelungseinrichtung konfiguriert ist, Regionen gleicher Charakteristik, Komponenten des Vorsatzgeräts und Eigenschaften des Erntegutstroms zu erkennen, und konfiguriert ist, das jeweils Erkannte, also die erkannten Regionen gleicher Charakteristik, die erkannten Komponenten des Vorsatzgeräts und/oder die erkannten Eigenschaften des Erntegutstroms, zur Steuerung und/oder Regelung von Prozessabläufen in der landwirtschaftlichen Arbeitsmaschine zu nutzen.

Mit einem "Erkennen" der besagten Regionen und Komponenten ist bevorzugt nicht bloß ein Ermitteln von Bereichen gemeint, sondern auch ein eindeutiges Identifizieren des jeweiligen Bereichs, das heißt eine Zuordnung des Bereichs zu einer Funktion und/oder Eigenschaft. Demnach ist beispielsweise mit dem Erkennen der Region mit dem Feldbestand vor dem Vorsatzgerät gemeint, dass durch eine sensorische Erfassung und Bildverarbeitung zunächst ein Bereich detektiert bzw. verortet wird und anschließend dieser Bereich als ein konkreter Bereich mit einer bestimmten Funktion und/oder Eigenschaft, beispielsweise konkret als Feldbestand vor dem Vorsatzgerät, identifiziert wird. Die einzelnen Bereiche können somit nicht nur aufgrund ihrer Lage, sondern auch aufgrund ihrer Funktion und/oder Eigenschaft voneinander unterschieden werden. Dadurch wird ermöglicht, ermittelte Bewegungen zu differenzieren.

Anspruch 2 definiert verschiedene bevorzugte Regionen, die die Bildverarbeitungseinheit ermitteln und insbesondere identifizieren kann. Nach der Ausgestaltung gemäß Anspruch 3 ist eine Identifizierung anhand gespeicherter, den jeweiligen Bereich (Region bzw. Komponente) charakterisierender Identifikationsdaten möglich. Beispielsweise können in einem Datenspeicher als Identifikationsdaten bestimmte Abmessungen oder Positionen einer Region oder Komponente innerhalb des Vorsatzgeräts oder außerhalb davon abgelegt sein, anhand der dann die Identifizierung der Region bzw. Komponente als eine bestimmte Region bzw. Komponente erfolgen kann.

Um nun die Ermittlung der Regionen und/oder Komponenten und/oder Gutstromeigenschaften zu ermöglichen, wendet die Bildverarbeitungseinheit verschiedene Verfahren basierend auf den von der Sensoreinheit erzeugten Bildern anwenden. Dazu wendet die Bildverarbeitungseinheit das Verfahren der Geschwindigkeitskennfeldermittlung, auch als Methode des optischen Flusses bekannt, an, das im Weiteren noch näher erläutert wird. Zusätzlich oder alternativ wendet sie das Verfahren der Linien-Erkennung an, das ebenfalls im Weiteren noch erläutert wird. Erfindungsgemäß wendet sie mindestens einen Farbfilter an. Auf diese Weise kann eine Objekt-Detektion durchgeführt werden, bei der insbesondere Biomasse einerseits von mechanischen Objekten andererseits unterschieden wird.

Die Ansprüche 4 bis 7 betreffen das Verfahren der Geschwindigkeitskennfeldermittlung. Die Geschwindigkeitskennfeldermittlung bzw. Methode des optischen Flusses ist ein an sich bekanntes Bildverarbeitungsverfahren und basiert auf der Ermittlung und Analyse von Intensitätsmustern (Pixeln oder Pixelgruppen) in aufeinanderfolgenden Bildern einer Bildsequenz. So wird, insbesondere über eine oder mehrere Kameras, eine Bildsequenz erzeugt, also eine Vielzahl aufeinanderfolgender Bilder. Jeweils zwei aufeinanderfolgende Bilder, insbesondere zwei unmittelbar aufeinanderfolgende Bilder, der Bildsequenz werden zu einem Bildpaar gruppiert, wobei Positionsverschiebungen von Intensitätsmustern, das heißt von Pixeln oder Pixelgruppen, zwischen den Bildern des jeweiligen Bildpaares ermittelt werden. Aus diesen Positionsverschiebungen der Intensitätsmuster lässt sich, wenn die Zeitspanne zwischen den Bildern des Bildpaares bekannt ist, auf die Geschwindigkeit schließen, mit denen sich die Intensitätsmuster fortbewegen. Auch die Richtung, in die sich die Intensitätsmuster fortbewegen, lässt sich daraus ermitteln. Die Methode des optischen Flusses umfasst also die pixelbasierte Generierung von Informationen einerseits zu Geschwindigkeiten von Intensitätsmustern und andererseits zu deren Bewegungsrichtungen. Die Geschwindigkeiten mehrerer Intensitätsmuster lassen sich für jedes Bildpaar und jede aus mehreren Bildpaaren bestehende Bildsequenz zu Geschwindigkeitskennfeldern zusammenfassen, die allgemein auch als optischer Fluss bezeichnet werden.

Da sich nun die Biomasse einerseits und die Oberflächenabschnitte der mechanischen Komponenten des Vorsatzgeräts andererseits jeweils auf charakteristische Weise bewegen, kann die Bildverarbeitungseinheit auch die einzelnen Bereiche voneinander unterscheiden.

Die Ansprüche 8 bis 11 betreffen das Verfahren der Linien-Erkennung, das zusätzlich oder alternativ angewendet werden kann. Hierbei handelt es sich um ein Bildverarbeitungsverfahren, bei dem für das jeweilige Bild zunächst eine Kantendetektion durchgeführt wird, aus der ein Kantenbild erzeugt wird. Bei einer Kantendetektion werden flächige Bereiche in einem digitalen Bild voneinander getrennt, wenn sie sich entlang gerader oder gekrümmter Linien ausreichend in Farb- oder Grauwert, Helligkeit oder Textur unterscheiden. Eine solche Kantendetektion bzw. Erzeugung eines Kantenbildes wird insbesondere mittels des an sich bekannten Canny-Algorithmus durchgeführt. Anschließend werden vorschlagsgemäß bei dem Verfahren der Linien-Erkennung in dem Kantenbild über eine Geradenerkennung gerade Linien ermittelt und dargestellt bzw. hervorgehoben. Eine solche Geradenerkennung erfolgt vorzugsweise mittels der an sich bekannten Hough-Transformation. Mittels der Linien-Erkennung können Konturen von Komponenten oder deren Maschinenteilen erkannt werden, was es ebenfalls ermöglicht, einzelne Bereiche (Regionen bzw. Komponenten) voneinander zu unterscheiden und ggf. auch zu identifizieren. Auf diese Weise lässt sich in einem digitalen Bild, das beispielsweise eine Erntegutbergungsanordnung eines Mähdreschers abbildet, insbesondere die Haspel hervorheben und somit identifizieren, da diese von vielen geraden Linien in einem zweidimensionalen Bild dargestellt wird. Auch wird neben der Detektion der jeweiligen Komponente die Ermittlung geometrischer Parameter der jeweiligen Komponente, beispielsweise die Neigung und/oder Höhe der Komponente, ermöglicht.

Werden nun Bildpaare aus aufeinanderfolgenden Bildern einer von der Sensoreinheit erzeugten Bildsequenz über die Linien-Erkennung verarbeitet, ergeben sich in jedem Bild Linienmuster, nämlich Muster aus der oder den mittels der Geradenerkennung ermittelten geraden Linien. In einem entsprechenden Bildpaar können dann ähnlich wie bei dem Verfahren der Geschwindigkeitskennfeldermittlung Positionsverschiebungen von Linienmustern, das heißt von Linien oder Liniengruppen, zwischen den Bildern des jeweiligen Bildpaares ermittelt werden. Aus diesen Positionsverschiebungen der Linienmuster lässt sich, wenn die Zeitspanne zwischen den Bildern des Bildpaares bekannt ist, auch auf die Geschwindigkeit schließen, mit denen sich die Linienmuster fortbewegen. Grundsätzlich lässt sich auch die Richtung, in der sich die Linienmuster fortbewegen, ermitteln. Die Linien-Erkennung umfasst also die linienbasierte Generierung von Informationen zu Geschwindigkeiten von Linienmustern und ggf. zu deren Bewegungsrichtungen. Neben der Erkennung der Bereiche ist es somit auch möglich, die Geschwindigkeit zu ermitteln, mit der sich Linien bzw. Konturen von Komponenten zwischen zwei aufeinanderfolgenden Bildern bewegen.

Die Ansprüche 12 bis 17 betreffen die Möglichkeit, Referenzregionen oder Referenzoberflächenabschnitte zu bestimmen, mit denen eine andere, aktuell zu analysierende Region verglichen werden kann. Ein solcher Vergleich zwischen zwei Regionen, von denen eine als Basis (Referenz) dient, ermöglicht es, auf Eigenschaften, insbesondere die Geschwindigkeit, in der aktuell zu analysierenden Region zu schließen. Entsprechendes gilt nicht nur für Regionen, sondern auch für Komponenten bzw. deren Oberflächenabschnitte. Besonders bevorzugt besteht dabei gemäß den Ansprüchen 15 und 16 die Möglichkeit, für eine Referenzregion eine Referenzgeschwindigkeit zu bestimmen. Die Referenzgeschwindigkeit lässt sich beispielsweise dadurch bestimmen, dass die Fahrgeschwindigkeit der landwirtschaftlichen Arbeitsmaschine, die bekannt ist bzw. von entsprechenden Sensoren genau erfasst werden kann, mit einer aus den Verschiebungsbeträgen berechneten Geschwindigkeit des Feldbestands einer Region ins Verhältnis gesetzt wird. Bei der Referenzgeschwindigkeit handelt es sich dann um eine der Fahrgeschwindigkeit in einem bestimmten Verhältnis entsprechende Geschwindigkeit. Entsprechendes ist auch für Geschwindigkeiten von Oberflächenabschnitten von Maschinenteilen der Komponenten möglich. Beispielsweise kann hier die Drehzahl einer Komponente, beispielsweise der Haspel, die bekannt ist bzw. von entsprechenden Sensoren genau erfasst werden kann, mit der aus den Verschiebungsbeträgen berechneten Geschwindigkeit des Oberflächenabschnitts ins Verhältnis gesetzt werden. Bei der Referenzgeschwindigkeit handelt es sich dann um eine der Drehzahl in einem bestimmten Verhältnis entsprechende Geschwindigkeit. Anhand solcher Referenzgeschwindigkeiten kann dann auch auf Geschwindigkeiten in anderen Regionen oder von anderen Oberflächenabschnitten von Komponenten geschlossen werden.

Nach der Ausgestaltung gemäß Anspruch 18 handelt es sich bei dem Vorsatzgerät um eine Erntegutbergungsanordnung zum Abtrennen und Aufnehmen von Erntegut aus einem Feldbestand, die als Komponenten eine Erntegutaufnahmevorrichtung, eine Erntegutschneidvorrichtung, eine Erntegutfördervorrichtung und eine Ernteguteinzugsvorrichtung aufweist. Insbesondere handelt es sich dabei um eine Erntegutbergungsanordnung eines Mähdreschers oder Feldhäckslers.

Nach der weiteren Ausgestaltung gemäß Anspruch 19 kann die Geschwindigkeit eines Oberflächenabschnitts eines Maschinenteils der jeweiligen Komponente auch anhand eines Markers ermittelt werden, wobei der Marker dann den Oberflächenabschnitt bildet. Als Marker dient entweder eine charakteristische Stelle, beispielsweise Kante oder Fläche, an dem jeweiligen Maschinenteil oder eine separat angebrachte Markierung. Der Marker stellt dann den Oberflächenabschnitt dar, der zur Ermittlung der Geschwindigkeit von der Sensoreinheit sensorisch erfasst wird.

Nach der bevorzugten Ausgestaltung gemäß Anspruch 20 können verschiedene Sensoren zur sensorischen Erfassung des Erntegutstroms und/oder Vorsatzgeräts vorgesehen sein, insbesondere mindestens ein optischer Sensor, beispielsweise eine Kamera oder mehrere Kameras. Ein solcher optischer Sensor ist insbesondere dann sinnvoll, wenn das Verfahren der Geschwindigkeitskennfeldermittlung (Methode des optischen Flusses) angewendet werden soll. Grundsätzlich kann die Sensoreinheit auch mindestens einen Lidar-Sensor, mindestens einen Radarsensor und/oder mindestens einen Ultraschallsensor aufweisen. Sämtliche zuvor genannten Sensoren sind auch geeignet für die Anwendung des Verfahrens der Linien-Erkennung.

Nach einer weiteren Lehre gemäß Anspruch 22, der eigenständige Bedeutung zukommt, wird ein Verfahren zum Betrieb einer landwirtschaftlichen Arbeitsmaschine, insbesondere einer vorschlagsgemäßen landwirtschaftlichen Arbeitsmaschine, beansprucht, bei dem Regionen gleicher Charakteristik, Komponenten des Vorsatzgerätes und Eigenschaften des Erntegutstroms erkannt werden und darauf basierend Prozessabläufe in der landwirtschaftlichen Arbeitsmaschine gesteuert und/oder geregelt werden, wobei mittels des Verfahrens der Geschwindigkeitskennfeldermittlung und/oder des Verfahrens der Linien-Erkennung, unter Anwendung mindestens eines Farbfilters, eine Objekt-Detektion durchgeführt wird, dass die Objekt-Detektion eine Unterscheidung von Biomasse einerseits und mechanischen Objekten andererseits umfasst, und/oder, dass die Objekt-Detektion eine Unterscheidung einer oder mehrerer Regionen (A, B, G, H) einerseits und eines oder mehrerer Oberflächenabschnitte von Maschinenteilen der Komponenten (C, D, E, F) andererseits umfasst.

Im Folgenden wird die Erfindung anhand einer lediglich ein Ausführungsbeispiel darstellenden Zeichnung näher erläutert. In der Zeichnung zeigt
Fig. 1 eine schematische Seitenansicht einer vorschlagsgemäßen landwirtschaftlichen Arbeitsmaschine sowie eine Detailansicht des Vorsatzgeräts der landwirtschaftlichen Arbeitsmaschine,
Fig. 2 eine schematische Vorderansicht der vorschlagsgemäßen landwirtschaftlichen Arbeitsmaschine mit dem Vorsatzgerät,
Fig. 3 eine schematische Darstellung a) eines von der Sensoreinheit der vorschlagsgemäßen landwirtschaftlichen Arbeitsmaschine erzeugten Bildes mit dem Vorsatzgerät und b) des Bildes nach einer Verarbeitung durch die Bildverarbeitungseinheit mittels eines ersten Bildverarbeitungsverfahrens und
Fig. 4 eine schematische Darstellung eines von der Sensoreinheit der vorschlagsgemäßen landwirtschaftlichen Arbeitsmaschine erzeugten Bildes mit dem Vorsatzgerät a) nach einem ersten Verarbeitungsschritt eines zweiten Bildverarbeitungsverfahrens und b) nach einem zweiten Verarbeitungsschritt des zweiten Bildverarbeitungsverfahrens.

Die vorschlagsgemäße landwirtschaftliche Arbeitsmaschine 1, bei der es sich hier beispielhaft um einen Mähdrescher handelt, weist als Vorsatzgerät 2 eine Erntegutbergungsanordnung auf, die hier von einem Schneidwerk 3 gebildet wird und in Fahrtrichtung vorne an der landwirtschaftlichen Arbeitsmaschine 1 angeordnet ist. Die Erntegutbergungsanordnung 2 bzw. das Schneidwerk 3 dient dem Abtrennen und Aufnehmen von Erntegut 4 aus einem Feldbestand 5, wobei das Erntegut 4 einer weiteren Verarbeitung durch mehrere weitere Arbeitsorgane 6 der landwirtschaftlichen Arbeitsmaschine 1 zugeführt wird. Die weiteren Ausführungen am Beispiel der Erntegutbergungsanordnung 2 sind nicht auf diesen Anwendungsfall beschränkt, sondern gelten sinngemäß auch für andere Vorsatzgeräte 2, beispielsweise einen Erntevorsatz eines Feldhäckslers.

Die Erntegutbergungsanordnung 2 weist als Komponenten C, D, E, F hier und vorzugsweise jedenfalls eine Erntegutaufnahmevorrichtung 7 in Form einer Haspel, eine Erntegutschneidvorrichtung 8 in Form eines Schneidwerkstisches mit einem Messerbalken, eine dieser prozesstechnisch nachgeordnete Erntegutfördervorrichtung 9 in Form einer Förderschnecke, insbesondere Querförderschnecke, und eine dieser wiederum prozesstechnisch nachgeordnete Ernteguteinzugsvorrichtung 10 in Form eines Schrägförderers auf.

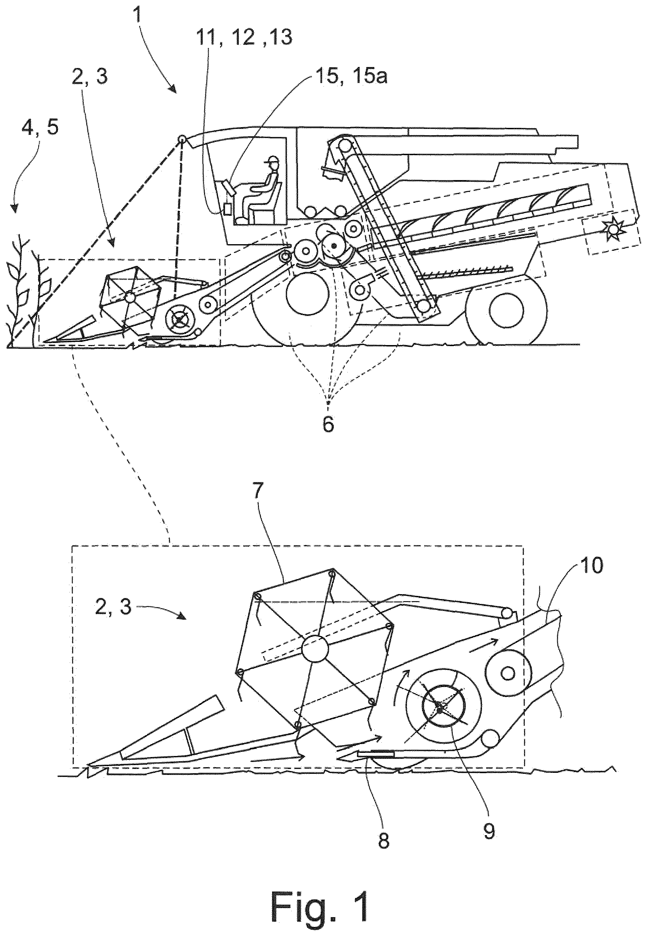

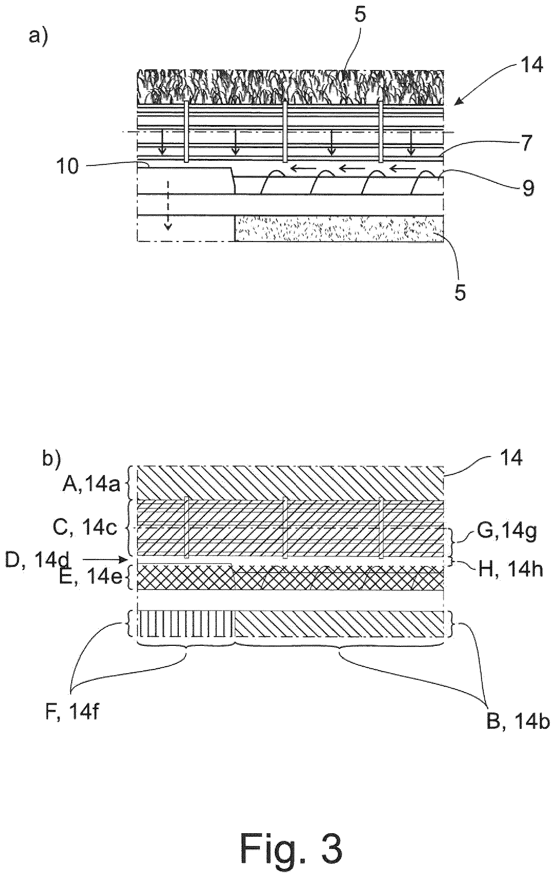

Bei der vorschlagsgemäßen landwirtschaftlichen Arbeitsmaschine 1 wird das Erntegut 4 als Erntegutstrom (in Fig. 1 und 3a) durch Pfeile dargestellt) durch die Erntegutbergungsanordnung 2 geführt. Hier und vorzugsweise wird das Erntegut 4 über die Erntegutaufnahmevorrichtung 7 bzw. Haspel aufgenommen und gehalten, während es von der Erntegutschneidvorrichtung 8 abgetrennt wird. Das abgetrennte Erntegut 4 wird dann gegen die hier und vorzugsweise quer verlaufende Erntegutfördervorrichtung 9 bewegt und von dieser in Querrichtung, das heißt quer zur Fahrrichtung, zur Fahrzeugmitte hin gefördert, wo es dann von der Ernteguteinzugsvorrichtung 10 eingezogen und weiter ins Innere der landwirtschaftlichen Arbeitsmaschine 1 gefördert wird.

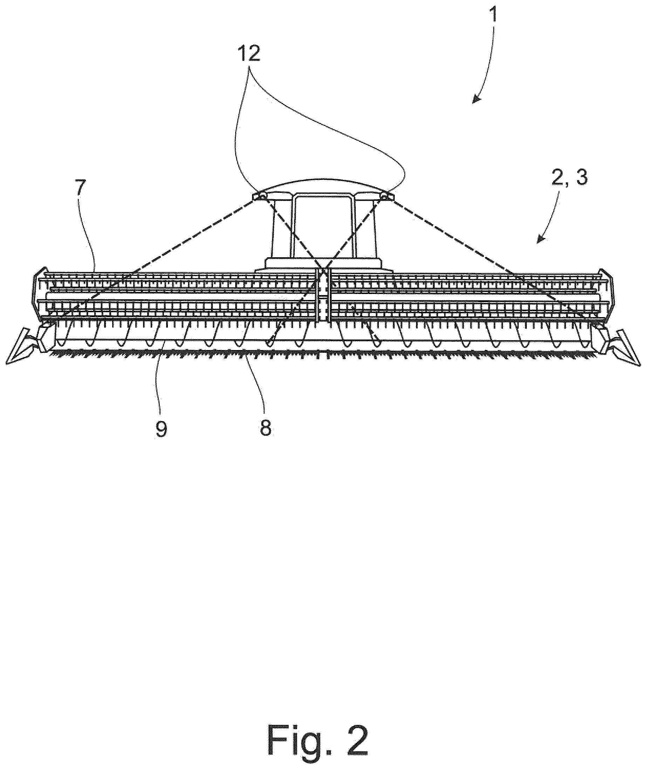

Die landwirtschaftliche Arbeitsmaschine 1 weist ferner eine Regelungseinrichtung 11 auf, die hier und vorzugsweise dazu dient, neben den genannten Komponenten C, D, E, F der Erntegutbergungsanordnung 2 auch die weiteren Arbeitsorgane 6 der landwirtschaftlichen Arbeitsmaschine 1 zu regeln. Die Regelung kann Geschwindigkeits- bzw. Drehzahlregelungen und/oder Höhenverstellungen und/oder Positionsverstellungen umfassen. Auch wird hier und vorzugsweise über die Regelungseinrichtung 11 die Fahrgeschwindigkeit der landwirtschaftlichen Arbeitsmaschine 1 geregelt. Die Regelungseinrichtung 11 weist hier und vorzugsweise eine Sensoreinheit 12 in Form zweier Kameras auf, wobei die Sensoreinheit 12 im Frontbereich der landwirtschaftlichen Arbeitsmaschine 1, insbesondere auf und/oder innerhalb der Fahrerkabine der landwirtschaftlichen Arbeitsmaschine 1, angeordnet ist und der optischen Erfassung des Erntegutstroms dient. Der Bereich der optischen Erfassung ist hier symbolisch in den Fig. 1 und 2 gestrichelt dargestellt.

Weiter weist die Regelungseinrichtung 11 eine Bildverarbeitungseinheit 13 zur Verarbeitung von Bildern 14 auf, von denen eines beispielhaft in Fig. 3a) dargestellt ist. Die Bilder 14 werden von der Sensoreinheit 12 basierend auf dem optisch erfassten Erntegutstrom erzeugt.

Außerdem weist die Regelungseinrichtung 11 hier und vorzugsweise eine Datenausgabeeinheit 15 auf, die insbesondere eine Anzeigeeinrichtung 15a umfasst und zur optionalen Ausgabe bzw. Anzeige der von der Bildverarbeitungseinheit 13 verarbeiteten Bilder 14 dient.

Wesentlich ist nun zum Einen, dass die Regelungseinrichtung 11 konfiguriert ist, Regionen A, B, G, H gleicher Charakteristik, Komponenten C, D, E, F des Vorsatzgeräts 2 bzw. hier der Erntegutbergungsanordnung sowie Eigenschaften des Erntegutstroms zu erkennen. Die Regionen A, B, G, H gleicher Charakteristik einerseits und die Komponenten C, D, E, F des Vorsatzgeräts 2 andererseits stellen von der Sensoreinheit 12 erfassbare Bereiche im und um das Vorsatzgerät 2 dar, die als Basis für eine differenzierte Betrachtung und Analyse des Erntegutstroms besonders geeignet sind.

Eine Region A gleicher Charakteristik ist im dargestellten und insoweit bevorzugten Ausführungsbeispiel der nicht-abgeerntete Feldbestand 5 in Fahrtrichtung vor der Erntegutbergungsanordnung 2. Eine weitere Region B gleicher Charakteristik ist hier der abgeerntete Feldbestand 5 in Form des Stoppelfeldes hinter der Erntegutbergungsanordnung 2. Noch eine weitere Region G gleicher Charakteristik wird hier von dem Erntegutstrom innerhalb der Erntegutaufnahmevorrichtung 7 in Form der Haspel gebildet. Schließlich wird in dem Ausführungsbeispiel noch eine weitere Region H gleicher Charakteristik von dem Erntegutstrom vertikal oberhalb der Erntegutschneidvorrichtung 8 in Form des Schneidwerkstisches, hier in dem Bereich zwischen der Haspel und der Erntegutfördervorrichtung 9 in Form der Förderschnecke gebildet. Diese Regionen sind alle dadurch charakterisiert, dass Biomasse an diesen vorbeiströmt (in Form des Feldbestands während der Fahrt) oder diese von Biomasse durchströmt werden (in Form des Erntegutstroms).

Neben diesen Bereichen, die durch das Vorhandensein von überwiegend Biomasse (Erntegut, Feldbestand) innerhalb des Bereichs gekennzeichnet sind, werden bei dem hier dargestellten Ausführungsbeispiel weitere Bereiche von Komponenten C, D, E, F der Erntegutbergungsanordnung 2 gebildet. Diese Bereiche weisen jeweils mindestens einen von der Sensoreinheit 12 sensorisch erfassbaren Oberflächenabschnitt eines Maschinenteils der jeweiligen Komponente C, D, E, F auf. Entsprechende Komponenten C, D, E, F sind hier die Erntegutaufnahmevorrichtung 7 in Form der Haspel, die Erntegutschneidvorrichtung 8 in Form des Schneidwerkstisches, die Erntegutfördervorrichtung 9 in Form der Förderschnecke und die Ernteguteinzugsvorrichtung 10 in Form des Schrägförderers. Die Aufzählung von Komponenten im vorschlagsgemäßen Sinne ist nicht abschließend zu verstehen. Vielmehr sind noch viele andere Komponenten denkbar, die ebenfalls sensorisch erfasst werden können, beispielsweise auch Trittstufen, Rahmenteile o. dgl. Jeder dieser Bereiche wird also durch das Vorhandensein eines Oberflächenabschnitts eines Maschinenteils einer Komponente C, D, E, F der Erntegutbergungsanordnung 2 definiert.

Die Regelungseinrichtung 11 führt außerdem, insbesondere über die Bildverarbeitungseinheit 13, eine Erkennung von Eigenschaften des Erntegutstroms durch, beispielsweise von Gutflussgeschwindigkeiten des Erntegutstroms oder Abschnitten davon und/oder von einem Gutstau.

Wesentlich ist nun weiter, dass die Regelungseinrichtung 11 das jeweils Erkannte, also die erkannten Regionen und Komponenten A-H sowie die erkannten Eigenschaften des Erntegutstroms, zur Steuerung und/oder Regelung von Prozessabläufen in der landwirtschaftlichen Arbeitsmaschine 1 nutzt. Auf dieser Basis können dann Parameter von Komponenten C, D, E, F der Erntegutbergungsanordnung 2 und/oder Parameter von weiteren Arbeitsorganen 6 der landwirtschaftlichen Arbeitsmaschine 1, hier des Mähdreschers, angepasst werden. Aufgrund der erfolgten Einteilung in Regionen und Komponenten A-H lassen sich die Erntegutbergungsanordnung 2 und der Erntegutstrom sehr differenziert betrachten und analysieren, was wiederum die Überwachung der Erntegutbergungsanordnung 2 und des Erntegutstroms optimiert.

Bei dem hier dargestellten Ausführungsbeispiel werden die Regionen und Komponenten A-H zunächst jeweils detektiert bzw. ermittelt. Anschließend werden zumindest einige der Regionen und Komponenten A-H konkret identifiziert, indem jeder dieser Bereiche vorzugsweise mit zugeordneten, diese charakterisierenden Identifikationsdaten (z.B. Abmessungen, Positionen etc.) verglichen wird, welche Identifikationsdaten insbesondere in der Bildverarbeitungseinheit 13 gespeichert sind. Beispielsweise kann als eine Region A der Feldbestand 5 vor der Erntegutbergungsanordnung 2 ermittelt werden und dann auch insbesondere als solcher, das heißt als der Feldbestand 5 vor der Erntegutbergungsanordnung 2, identifiziert werden. Entsprechend kann beispielsweise als eine Region B der Feldbestand 5 hinter der Erntegutbergungsanordnung 2 ermittelt werden und dann insbesondere konkret als der Feldbestand 5 hinter der Erntegutbergungsanordnung 2 identifiziert werden. Grundsätzlich ist dies auch für Komponenten möglich. So ist es beispielsweise denkbar, als eine Komponente C die Erntegutaufnahmevorrichtung 7 bzw. Haspel zu ermitteln und dann konkret als solche, das heißt als Erntegutaufnahmevorrichtung 7 bzw. Haspel, zu identifizieren. Oder es kann vorgesehen sein, als eine Komponente D die Erntegutschneidvorrichtung 8 bzw. den Schneidwerkstisch zu ermitteln und insbesondere als solche zu identifizieren. Weiter Beispiele sind ebenso denkbar.

Die Ermittlung der Regionen und Komponenten A-H erfolgt dabei mittels der Bildverarbeitungseinheit 13, und zwar durch Ermittlung von zugeordneten Bildbereichen 14a-14h in den von der Sensoreinheit 12 erzeugten Bildern 14, was im Weiteren noch näher erläutert wird. Dazu können verschiedene Bildverarbeitungsverfahren, einzeln oder in Kombination, angewendet werden, von denen zwei besonders bevorzugte, nämlich das Verfahren der Geschwindigkeitskennfeldermittlung und das Verfahren der Linien-Erkennung im Folgenden näher erläutert werden. Zusätzlich zur Anwendung mindestens eines Farbfilters, können diese Verfahren auch noch mit anderen Verfahren zur Optimierung der Bilddaten kombiniert werden, beispielsweise durch Anwendung mindestens einer Rauschunterdrückung, einer Kontraständerung, einer Helligkeitsänderung o.dgl. Mittels dieser Verfahren wird dann eine Objekt-Detektion durchgeführt, die eine Unterscheidung von Biomasse einerseits und mechanischen Objekten andererseits umfasst, und/oder, die eine Unterscheidung einer oder mehrerer Regionen A, B, G, H einerseits und eines oder mehrerer Oberflächenabschnitte von Maschinenteilen der Komponenten C, D, E, F andererseits umfasst.

Die Bildverarbeitungseinheit 13 kann bei der vorschlagsgemäßen landwirtschaftlichen Arbeitsmaschine 1 basierend auf den von der Sensoreinheit 12, hier und vorzugsweise von einer oder mehreren Kameras, erzeugten Bildern 14 ein Geschwindigkeitskennfeld erstellen, auch als optischer Fluss bezeichnet. Der optische Fluss ist die durch eine Bildfrequenz gegebene pixelweise Bewegung in der Bildfläche, auch als Flussfeld bezeichnet. Die Bildfrequenz ist dabei wiederum mit der Pixelposition und dem Zeitpunkt definiert. Die Bewegung ist ein Vektorfeld in einem Bild 14, das durch Überlagerung zweier Bilder 14 eines Bildpaars erzeugt wird, und beschreibt die zeitabhängige Verschiebung eines Pixels oder einer Pixelgruppe, im Weiteren auch als Intensitätsmuster bezeichnet, von einem zum nächsten Bild 14 des Bildpaars. Das aus den beiden Einzelbildern 14 zusammengesetzte Bild kann dabei zuvor durch die Bildverarbeitungseinheit 13 überarbeitet werden, wie dies beispielsweise in der EP 3 300 019 A1 im Detail beschrieben ist. Lediglich beispielhaft sei hier die Lucas-Kanade-Methode genannt, bei der die Bildauflösung der Bilder reduziert wird. Das resultierende Bild wird dann herangezogen, um das Geschwindigkeitskennfeld zu erstellen.

Das Geschwindigkeitskennfeld weist hier zum einen die Gutflussgeschwindigkeiten, insbesondere von Erntegutpartikeln, sowie Geschwindigkeiten von Oberflächenabschnitten von Maschinenteilen der Komponenten C, D, E, F der Erntegutbergungsanordnung 2 auf.

Zur Erstellung des Geschwindigkeitskennfelds gruppiert die Bildverarbeitungseinheit 13 jeweils zwei aufeinanderfolgende, insbesondere zwei unmittelbar aufeinanderfolgende, Bilder 14 einer von der Sensoreinheit 12 erzeugten Bildsequenz zu einem Bildpaar. Dabei wird eine Zeitspanne zwischen den Bildern 14 des jeweiligen Bildpaares von der Bildverarbeitungseinheit 13 erfasst. Zusätzlich oder alternativ kann eine Zeitspanne von der Bildverarbeitungseinheit 13 vorgegeben werden. Dabei weist jedes Bild 14 des jeweiligen Bildpaares ein Intensitätsmuster, also einen Pixel oder eine Pixelgruppe, auf. Die Bildverarbeitungseinheit 13 ermittelt von den Intensitätsmustern zwischen den Bildern 14 des jeweiligen Bildpaares Positionsverschiebungen, die Verschiebungsbeträge und Verschiebungsrichtungen umfassen. Hier und vorzugsweise werden die Verschiebungsbeträge und Verschiebungsrichtungen für jedes Bildpaar jeweils als Vektoren eines Vektorfeldes des jeweiligen Bildpaares zusammengefasst.

Aus den Verschiebungsbeträgen von den Intensitätsmustern zwischen den Bildern 14 des jeweiligen Bildpaares und der Zeitspanne zwischen den Bildern 14 des jeweiligen Bildpaares werden dann durch die Bildverarbeitungseinheit 13 Geschwindigkeiten berechnet. Die Geschwindigkeiten sind wie zuvor angedeutet Gutflussgeschwindigkeiten und/oder Geschwindigkeiten von Oberflächenabschnitten der Komponenten C, D, E, F der Erntegutbergungsanordnung 2. Die jeweilige Geschwindigkeit eines Oberflächenabschnitts eines Maschinenteils der jeweiligen Komponente C, D, E, F kann auch anhand eines Markers ermittelt werden, wobei der Marker dann den Oberflächenabschnitt bildet, der für die Ermittlung der Geschwindigkeit des Oberflächenabschnitts dieser Komponente C, D, E, F sensorisch erfasst wird.

Ein Vergleich der solchermaßen ermittelten Geschwindigkeiten bzw. Verschiebungsbeträge und Verschiebungsrichtungen erlaubt nun beispielsweise einerseits die Unterteilung in die einzelnen Bereiche, das heißt in die einzelnen Regionen und Komponenten A-H, da sich die Geschwindigkeiten bzw. die Verschiebungsbeträge und Verschiebungsrichtungen bei allen Regionen und Komponenten A-H unterscheiden. Eine beispielhafte Unterteilung ist in Fig. 3b) dargestellt.

Andererseits kann anhand der ermittelten Geschwindigkeiten bzw. Verschiebungsbeträge und Verschiebungsrichtungen die besagte Erkennung von Eigenschaften des Erntegutstroms erfolgen, beispielsweise die Erkennung eines sich anbahnenden Gutstaus.

Wie nun Fig. 3b) zeigt, werden die von der Sensoreinheit 12 erzeugten Bilder 14 von der Bildverarbeitungseinheit 13 in Bildbereiche unterteilt, die jeweils einer der genannten Regionen und Komponenten A-H entsprechen. Wie Fig. 3a) und b) zu entnehmen ist, erfasst die Sensoreinheit 12 den Feldbestand 5 sowohl vor der Erntegutbergungsanordnung 2 als auch dahinter. Zusätzlich wird von der Sensoreinheit 12 hier und vorzugsweise die Erntegutaufnahmevorrichtung 7, die Erntegutschneidvorrichtung 8, die Erntegutfördervorrichtung 9 und die Ernteguteinzugsvorrichtung 10 erfasst. Auch wird der Erntegutstrom innerhalb der Erntegutaufnahmevorrichtung 7 und der Erntegutstrom vertikal oberhalb der Erntegutschneidvorrichtung 8, hier zwischen der Erntegutaufnahmevorrichtung 7 und der Erntegutfördervorrichtung 9, erfasst. Um die relevanten Bereiche mit dem Erntegutstrom isolieren zu können, werden nun wie beschrieben die dargestellten Bildbereiche in den Bildern 14 ermittelt, hier und vorzugsweise ein Bildbereich 14a mit dem Feldbestand 5 vor der Erntegutbergungsanordnung 2, ein Bildbereich 14b mit dem Feldbestand 5 hinter der Erntegutbergungsanordnung 2, ein Bildbereich 14c mit der Erntegutaufnahmevorrichtung 7, ein Bildbereich 14d mit der Erntegutschneidvorrichtung 8, ein Bildbereich 14e mit der Erntegutfördervorrichtung 9, ein Bildbereich 14f mit der Ernteguteinzugsvorrichtung 10, ein Bildbereich 14g mit dem Erntegutstrom innerhalb der Erntegutaufnahmevorrichtung 7 und/oder ein Bildbereich 14h mit dem Erntegutstrom vertikal oberhalb der Erntegutschneidvorrichtung 8, insbesondere in dem Bereich zwischen der Erntegutaufnahmevorrichtung 7 und der Erntegutfördervorrichtung 9.

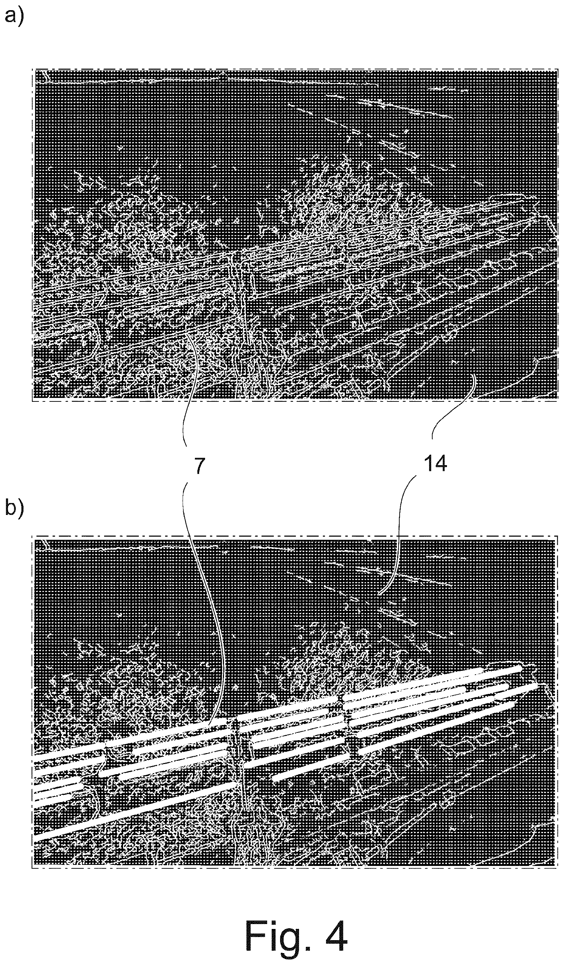

Grundsätzlich können, zusätzlich oder alternativ, einzelne Bildbereiche auch durch das Verfahren der Linien-Erkennung ermittelt und/oder hervorgehoben werden, was in Fig. 4 beispielhaft anhand der Erntegutaufnahmevorrichtung 7 in Form der Haspel dargestellt ist.

So werden bei dem hier dargestellten Ausführungsbeispiel, hier über die Bildverarbeitungseinheit 13, auch bei dem Verfahren der Linien-Erkennung von der Sensoreinheit 12 mehrere Bilder 14 erzeugt, hier auch durch die eine oder die mehreren Kameras. Alternativ oder zusätzlich kann die Sensoreinheit 12 zur sensorischen Erfassung der Erntegutbergungsanordnung 2 mindestens einen Lidar-, Radar- und/oder Ultraschallsensor aufweisen. Auf Basis der solcherma-βen erzeugten Bilder 14 wird dann zunächst für das jeweilige Bild 14 ein Kantenbild erzeugt, hier und vorzugsweise mittels des Canny-Algorithmus. Basierend darauf wird dann eine Geradenerkennung durchgeführt, bei der in dem Kantenbild gerade Linien ermittelt werden, hier und vorzugsweise mittels der Hough-Transformation, wobei die geraden Linien, wie Fig. 4b) zeigt, graphisch hervorgehoben werden können. Die hier in Fig. 4b) graphisch hervorgehobenen Linien definieren eine der beschriebenen und zu erkennenden Komponenten C, D, E, F, hier die Erntegutaufnahmevorrichtung 7 in Form der Haspel.

Ähnlich wie bei dem Verfahren der Geschwindigkeitskennfeldermittlung ist hier und vorzugsweise bei dem Verfahren der Linien-Erkennung vorgesehen, dass die Bildverarbeitungseinheit 13 jeweils zwei aufeinanderfolgende, insbesondere zwei unmittelbar aufeinanderfolgende, Bilder 14 einer von der Sensoreinheit 12 erzeugten Bildsequenz zu einem Bildpaar gruppiert, wobei eine Zeitspanne zwischen den Bildern 14 des jeweiligen Bildpaares von der Bildverarbeitungseinheit 13 erfasst wird und/oder vorgegeben ist, und wobei jedes Bild 14 des jeweiligen Bildpaares ein Linienmuster aus einer oder mehreren geraden Linien aufweist. Bei dem Linienmuster handelt es sich um die durch die beschriebene Geradenerkennung erhaltene Linie oder erhaltenen Linien. Dieses Linienmuster ist in Fig. 4b) hell hervorgehoben. Nun können auch hier Positionsverschiebungen von den Linienmustern zwischen zwei Bildern 14 eines jeweiligen Bildpaares ermittelt werden, die Verschiebungsbeträge und insbesondere Verschiebungsrichtungen von den Linienmustern umfassen. Auch diese Verschiebungsbeträge und Verschiebungsrichtungen können für jedes Bildpaar jeweils als Vektoren eines Vektorfeldes des jeweiligen Bildpaares zusammengefasst werden.

Aus den Verschiebungsbeträgen von den Linienmustern zwischen den Bildern 14 des jeweiligen Bildpaares und der Zeitspanne zwischen den Bildern 14 des jeweiligen Bildpaares ist es dann möglich, Geschwindigkeiten zu berechnen, bei diesem Ausführungsbeispiel die Geschwindigkeit eines Oberflächenabschnitts eines Maschinenteils der Erntegutaufnahmevorrichtung 7 in Form der Haspel. Wird statt der Haspel eine andere der Komponenten C, D, E, F als Basis für das Verfahren der Linien-Erkennung verwendet, können auch die Geschwindigkeiten der Oberflächenabschnitte der Maschinenteile dieser Komponente C, D, E, F der Erntegutbergungsanordnung 2 ermittelt werden.

Das Verfahren der Linien-Erkennung ermöglicht auf einfache und schnelle Weise neben der Detektion der jeweiligen Komponente C, D, E, F, hier der Haspel, und deren Geschwindigkeitsverhalten auch die Ermittlung geometrischer Parameter der jeweiligen Komponente, beispielsweise die Neigung und/oder Höhe der Komponente.

Vorschlagsgemäß ist gemäß einer besonders bevorzugten Ausgestaltung auch die Möglichkeit vorgesehen, zur Bestimmung von Kriterien und physikalischen Parametern bestimmte der zuvor genannten Regionen und Komponenten A-H relativ zueinander zu analysieren.

Dazu kann die Bildverarbeitungseinheit 13 eine oder mehrere Regionen A, B, G, H jeweils als Referenzregion und/oder einen oder mehrere Oberflächenabschnitte von Maschinenteilen der Komponenten C, D, E, F jeweils als Referenzoberflächenabschnitt vorgeben. Die jeweilige Referenzregion und/oder der jeweilige Referenzoberflächenabschnitt kann dann als Basis (Referenz) für einen Vergleich mit einer anderen Region A, B, G, H und/oder einem anderen Referenzoberflächenabschnitt herangezogen werden.

Die grundsätzliche Idee hierbei ist, dass für bestimmte Regionen oder Oberflächenabschnitte die tatsächliche Geschwindigkeit bekannt ist oder exakt ermittelt werden kann, beispielsweise über Drehzahlsensoren, und diese Geschwindigkeit herangezogen werden kann, um die anhand der Bildverarbeitungsverfahren (z.B. Geschwindigkeitskennfeldermittlung und/oder Linien-Erkennung) berechneten Geschwindigkeiten zu korrigieren bzw. zu kalibrieren. So sind die anhand der Bildverarbeitungsverfahren berechneten Geschwindigkeiten immer auch abhängig von den Vorsatz- und Maschineneinstellungen sowie den Umgebungsbedingungen und daher in der Regel bei jedem Anwendungsfall unterschiedlich. Ist aber eine tatsächliche Geschwindigkeit einer Region A, B, G, H oder eines Oberflächenabschnitts einer Komponente C, D, E, F bekannt, kann darüber auch ein Wert für die Geschwindigkeit in anderen Regionen oder Oberflächenabschnitten festgelegt werden.

Beispielsweise ist regelmäßig die Drehzahl der Haspel bekannt, womit auch ein Wert für die Geschwindigkeit des zugeordneten Oberflächenabschnitts dieser Komponente C in der Ebene der erzeugten Bilder 14 feststeht. Diese Geschwindigkeit bzw. dieser Geschwindigkeitswert bildet eine Referenzgeschwindigkeit bzw. einen Referenzgeschwindigkeitswert. Ferner ist ein Geschwindigkeitswert des zugeordneten Oberflächenabschnitts anhand der zuvor erwähnten Verschiebungsbeträge berechnet worden. Nun kann das Verhältnis zwischen den beiden Geschwindigkeitswerten, also dem Referenzgeschwindigkeitswert und dem anhand der Verschiebungsbeträge berechneten Geschwindigkeitswert, berechnet werden. Da dasselbe Verhältnis auch in anderen Regionen und Oberflächenabschnitten vorliegt, kann von der anhand der erwähnten Verschiebungsbeträge für die jeweils andere Region bzw. für den jeweils anderen Oberflächenabschnitt berechneten Geschwindigkeit auf die tatsächliche Geschwindigkeit für die jeweils andere Region bzw. für den jeweils anderen Oberflächenabschnitt geschlossen werden.

Somit kann die Bildverarbeitungseinheit konfiguriert sein, mittels des Verfahrens der Geschwindigkeitskennfeldermittlung und/oder mittels des Verfahrens der Linien-Erkennung eine Erntegutaufnahmevorrichtung 7, insbesondere Haspel, des Vorsatzgeräts 2 als eine Komponente C zu erkennen und unter Heranziehung deren tatsächlicher (bekannter) Drehzahl und durch Vergleich dieser Drehzahl mit der (anhand der Verschiebungsbeträge) berechneten Geschwindigkeit für den Oberflächenabschnitt des Maschinenteils der Komponente C eine Referenzgeschwindigkeit zu bestimmen.

Anstelle der Drehzahl der Haspel kann beispielsweise auch die Fahrgeschwindigkeit herangezogen werden, die ebenfalls bekannt ist. Damit steht auch ein Wert für die Geschwindigkeit des Feldbestands 5 relativ zu der Erntegutbergungsanordnung 2 fest. Da der Feldbestand 5 in den Regionen A, B erfasst wird, steht auch ein Wert für die Geschwindigkeit in diesen Regionen A, B in der Ebene der erzeugten Bilder 14 fest. Auch diese Geschwindigkeit bzw. dieser Geschwindigkeitswert bildet eine Referenzgeschwindigkeit bzw. einen Referenzgeschwindigkeitswert.

Somit kann die Bildverarbeitungseinheit konfiguriert sein, mittels des Verfahrens der Geschwindigkeitskennfeldermittlung und/oder mittels des Verfahrens der Linien-Erkennung eine Region A mit dem Feldbestand 5 vor dem Vorsatzgerät 2 oder eine Region B mit dem Feldbestand 5 hinter dem Vorsatzgerät 2 zu erkennen und unter Heranziehung der tatsächlichen (bekannten) Fahrgeschwindigkeit der landwirtschaftlichen Arbeitsmaschine 1 und durch Vergleich dieser Fahrgeschwindigkeit mit der (anhand der Verschiebungsbeträge) berechneten Geschwindigkeit für den Feldbestand 5 der jeweiligen Region A, B eine Referenzgeschwindigkeit zu bestimmen.

Insbesondere ist die Bildverarbeitungseinheit 13 konfiguriert, durch einen Vergleich einer mittels des Verfahrens der Geschwindigkeitskennfeldermittlung und/oder mittels des Verfahrens der Linien-Erkennung ermittelten Geschwindigkeit in einer Region A, B, D, H oder einer Komponente C, D, E, F mit der Referenzgeschwindigkeit die tatsächliche Geschwindigkeit des Ernteguts 4 oder Feldbestands 5 in der Region A, B, D, H oder die tatsächliche Geschwindigkeit der Komponente C, D, E, F zu berechnen.

Die Bildverarbeitungseinheit 13 kann also durch einen Vergleich einer Region A, B, G, H mit einer oder mehreren Referenzregionen oder einem oder mehreren Referenzoberflächenabschnitten die Gutflussgeschwindigkeit in dieser Region ermitteln. Entsprechend kann die Bildverarbeitungseinheit 13 auch durch einen Vergleich eines Oberflächenabschnitts eines Maschinenteils einer Komponente C, D, E, F mit einer oder mehreren Referenzregionen oder einem oder mehreren Referenzoberflächenabschnitten die Geschwindigkeit der diesen Oberflächenabschnitt aufweisenden Komponente C, D, E, F ermitteln.

### Bezugszeichenliste:

- 1: Landwirtschaftliche Arbeitsmaschine
- 2: Vorsatzgerät, insbesondere Erntegutbergungsanordnung
- 3: Schneidwerk
- 4: Erntegut
- 5: Feldbestand
- 6: Weitere Arbeitsorgane
- 7: Erntegutaufnahmevorrichtung
- 8: Erntegutschneidvorrichtung
- 9: Erntegutfördervorrichtung
- 10: Ernteguteinzugsvorrichtung
- 11: Regelungseinrichtung
- 12: Sensoreinheit
- 13: Bildverarbeitungseinheit
- 14: Bild
- 14a-h: Bildbereiche
- 15: Datenausgabeeinheit
- 15a: Anzeigeeinrichtung
- A-H: Erkannte Regionen und Komponenten

## Patentansprüche

1. Landwirtschaftliche Arbeitsmaschine mit einem Vorsatzgerät (2) zur Durchführung landwirtschaftlicher Arbeit und mit einer Regelungseinrichtung (11), die zumindest eine Sensoreinheit (12) zur sensorischen Erfassung eines Erntegutstroms im und/oder um das Vorsatzgerät (2) und eine Bildverarbeitungseinheit (13) zur Verarbeitung von Bildern (14), die von der Sensoreinheit (12) basierend auf dem sensorisch erfassten Erntegutstrom erzeugt werden, aufweist, wobei die Regelungseinrichtung (11) konfiguriert ist,
- Regionen (A, B, G, H) gleicher Charakteristik,
- Komponenten (C, D, E, F) des Vorsatzgeräts (2) und
- Eigenschaften des Erntegutstroms
zu erkennen, und konfiguriert ist, das jeweils Erkannte zur Steuerung und/oder Regelung von Prozessabläufen in der landwirtschaftlichen Arbeitsmaschine (1) zu nutzen, wobei die Bildverarbeitungseinheit (13) konfiguriert ist, zur Ermittlung der Regionen (A, B, G, H) und/oder Komponenten (C, D, E, F) und/oder Eigenschaften des Erntegutstroms, basierend auf den von der Sensoreinheit (12) erzeugten Bildern (14),
- ein Verfahren der Geschwindigkeitskennfeldermittlung anzuwenden und/ oder
- ein Verfahren der Linien-Erkennung anzuwenden
**dadurch gekennzeichnet,**
**dass** mittels des Verfahrens der Geschwindigkeitskennfeldermittlung und/oder des Verfahrens der Linien-Erkennung, unter Anwendung mindestens eines Farbfilters, eine Objekt-Detektion durchgeführt wird, dass die Objekt-Detektion eine Unterscheidung von Biomasse einerseits und mechanischen Objekten andererseits umfasst, und/oder, dass die Objekt-Detektion eine Unterscheidung einer oder mehrerer Regionen (A, B, G, H) einerseits und eines oder mehrerer Oberflächenabschnitte von Maschinenteilen der Komponenten (C, D, E, F) andererseits umfasst.

2. Landwirtschaftliche Arbeitsmaschine nach Anspruch 1, **dadurch gekennzeichnet, dass** die Bildverarbeitungseinheit (13) konfiguriert ist,
- als eine Region (A) den Feldbestand (5) vor dem Vorsatzgerät (2) zu ermitteln und als Feldbestand (5) vor dem Vorsatzgerät (2) zu identifizieren und/oder
- als eine Region (B) den Feldbestand (5) hinter dem Vorsatzgerät (2) zu ermitteln und als Feldbestand (5) hinter dem Vorsatzgerät (2) zu identifizieren und/oder
- als eine Komponente (C) eine Erntegutaufnahmevorrichtung (7) des Vorsatzgeräts (2) zu ermitteln und als Erntegutaufnahmevorrichtung (7) zu identifizieren und/oder
- als eine Komponente (D) eine Erntegutschneidvorrichtung (8) des Vorsatzgeräts (2) zu ermitteln und als Erntegutschneidvorrichtung (8) zu identifizieren und/oder
- als eine Komponente (E) eine Erntegutfördervorrichtung (9) des Vorsatzgeräts (2) zu ermitteln und als Erntegutfördervorrichtung (9) zu identifizieren und/oder
- als eine Komponente (F) eine Ernteguteinzugsvorrichtung (10) des Vorsatzgeräts (2) zu ermitteln und als Ernteguteinzugsvorrichtung (10) zu identifizieren,
- als eine Region (G) den Erntegutstrom innerhalb der Erntegutaufnahmevorrichtung (7) zu ermitteln und als Erntegutstrom innerhalb der Erntegutaufnahmevorrichtung (7) zu identifizieren und/oder
- als eine Region (H) den Erntegutstrom vertikal oberhalb der Erntegutschneidvorrichtung (8) des Vorsatzgeräts (2) zu ermitteln und als Erntegutstrom vertikal oberhalb der Erntegutschneidvorrichtung (8) zu identifizieren.

3. Landwirtschaftliche Arbeitsmaschine nach Anspruch 2, **dadurch gekennzeichnet, dass** die Bildverarbeitungseinheit konfiguriert ist, zur Identifizierung eine jeweils ermittelte Region (A, B, G, H) oder eine jeweils ermittelte Komponente (C, D, E, F) mit der jeweiligen Region (A, B, G, H) oder der jeweiligen Komponente (C, D, E, F) zugeordneten, diese charakterisierenden Identifikationsdaten zu vergleichen, die in der Bildverarbeitungseinheit (13) gespeichert sind.

4. Landwirtschaftliche Arbeitsmaschine nach einem der Ansprüche 1 bis 3, **dadurch gekennzeichnet, dass** die Bildverarbeitungseinheit (13) konfiguriert ist, bei dem Verfahren der Geschwindigkeitskennfeldermittlung basierend auf den von der Sensoreinheit (12) erzeugten Bildern (14) ein Geschwindigkeitskennfeld zu erzeugen, das Gutflussgeschwindigkeiten und/oder Geschwindigkeiten von Oberflächenabschnitten von Maschinenteilen der Komponenten (C, D, E, F) des Vorsatzgeräts (2) aufweist.

5. Landwirtschaftliche Arbeitsmaschine nach einem der Ansprüche 1 bis 4, **dadurch gekennzeichnet, dass** die Bildverarbeitungseinheit (13) zur Erstellung des Geschwindigkeitskennfelds derart konfiguriert ist, dass sie jeweils zwei aufeinanderfolgende Bilder (14) einer von der Sensoreinheit (12) erzeugten Bildsequenz zu einem Bildpaar gruppiert, wobei eine Zeitspanne zwischen den Bildern (14) des jeweiligen Bildpaares von der Bildverarbeitungseinheit (13) erfasst wird und/oder vorgegeben ist, und wobei jedes Bild (14) des jeweiligen Bildpaares ein Intensitätsmuster aufweist.

6. Landwirtschaftliche Arbeitsmaschine nach Anspruch 5, **dadurch gekennzeichnet, dass** die Bildverarbeitungseinheit (13) zur Erstellung des Geschwindigkeitskennfelds derart konfiguriert ist, dass sie Positionsverschiebungen von den Intensitätsmustern zwischen den Bildern (14) des jeweiligen Bildpaares ermittelt, wobei die Positionsverschiebungen Verschiebungsbeträge und Verschiebungsrichtungen von den Intensitätsmustern umfassen, dass die Verschiebungsbeträge und Verschiebungsrichtungen für jedes Bildpaar jeweils als Vektoren eines Vektorfeldes des jeweiligen Bildpaares zusammengefasst werden.

7. Landwirtschaftliche Arbeitsmaschine nach Anspruch 6, **dadurch gekennzeichnet, dass** die Bildverarbeitungseinheit (13) konfiguriert ist, aus den Verschiebungsbeträgen von den Intensitätsmustern zwischen den Bildern (14) des jeweiligen Bildpaares und der Zeitspanne zwischen den Bildern (14) des jeweiligen Bildpaares Geschwindigkeiten zu berechnen, dass die Geschwindigkeiten die Gutflussgeschwindigkeiten des Erntegutstroms und/oder die Geschwindigkeiten der Oberflächenabschnitte der Maschinenteile der Komponenten (C, D, E, F) des Vorsatzgeräts (2) sind.

8. Landwirtschaftliche Arbeitsmaschine nach einem der Ansprüche 1 bis 7, **dadurch gekennzeichnet, dass** die Bildverarbeitungseinheit (13) konfiguriert ist, bei dem Verfahren der Linien-Erkennung basierend auf den von der Sensoreinheit (12) erzeugten Bildern (14) zunächst für das jeweilige Bild (14) ein Kantenbild zu erzeugen und basierend auf dem jeweiligen Kantenbild gerade Linien in dem Kantenbild zu ermitteln, dass zum Erzeugen des Kantenbildes der Canny-Algorithmus und/oder zum Ermitteln der geraden Linien die Hough-Transformation angewendet wird.

9. Landwirtschaftliche Arbeitsmaschine nach Anspruch 8, **dadurch gekennzeichnet, dass** die Bildverarbeitungseinheit (13) derart konfiguriert ist, dass sie bei dem Verfahren der Linien-Erkennung jeweils zwei aufeinanderfolgende Bilder (14) einer von der Sensoreinheit (12) erzeugten Bildsequenz zu einem Bildpaar gruppiert, wobei eine Zeitspanne zwischen den Bildern (14) des jeweiligen Bildpaares von der Bildverarbeitungseinheit (13) erfasst wird und/oder vorgegeben ist, und wobei jedes Bild (14) des jeweiligen Bildpaares ein Linienmuster aus einer oder mehreren geraden Linien aufweist.

10. Landwirtschaftliche Arbeitsmaschine nach Anspruch 9, **dadurch gekennzeichnet, dass** die Bildverarbeitungseinheit (13) derart konfiguriert ist, dass sie bei dem Verfahren der Linien-Erkennung Positionsverschiebungen von den Linienmustern zwischen den Bildern (14) des jeweiligen Bildpaares ermittelt, wobei die Positionsverschiebungen Verschiebungsbeträge und insbesondere Verschiebungsrichtungen von den Linienmustern umfassen, vorzugsweise, dass die Verschiebungsbeträge und Verschiebungsrichtungen für jedes Bildpaar jeweils als Vektoren eines Vektorfeldes des jeweiligen Bildpaares zusammengefasst werden.

11. Landwirtschaftliche Arbeitsmaschine nach Anspruch 10, **dadurch gekennzeichnet, dass** die Bildverarbeitungseinheit (13) konfiguriert ist, aus den Verschiebungsbeträgen von den Linienmustern zwischen den Bildern (14) des jeweiligen Bildpaares und der Zeitspanne zwischen den Bildern (14) des jeweiligen Bildpaares Geschwindigkeiten zu berechnen, vorzugsweise, dass die Geschwindigkeiten die Geschwindigkeiten der Oberflächenabschnitte der Maschinenteile der Komponenten (C, D, E, F) des Vorsatzgeräts (2) sind, und/oder, dass eine Geschwindigkeit die Geschwindigkeit eines Oberflächenabschnitts eines Maschinenteils der Erntegutaufnahmevorrichtung (7) ist.

12. Landwirtschaftliche Arbeitsmaschine nach einem der vorhergehenden Ansprüche, **dadurch gekennzeichnet, dass** die Bildverarbeitungseinheit (13) konfiguriert ist, eine oder mehrere Regionen (A, B, G, H) jeweils als Referenzregion vorzugeben, und/oder, dass die Bildverarbeitungseinheit (13) konfiguriert ist, einen oder mehrere Oberflächenabschnitte von Maschinenteilen der Komponenten (C, D, E, F) jeweils als Referenzoberflächenabschnitt vorzugeben.

13. Landwirtschaftliche Arbeitsmaschine nach Anspruch 12, **dadurch gekennzeichnet, dass** die Bildverarbeitungseinheit (13) konfiguriert ist, eine oder mehrere Referenzregionen und/oder einen oder mehrere Referenzoberflächenabschnitte als Basis für einen Vergleich mit einer anderen Region (A, B, G, H) heranzuziehen, und/oder, dass die Bildverarbeitungseinheit (13) konfiguriert ist, eine oder mehrere Referenzregionen und/oder einen oder mehrere Referenzoberflächenabschnitte als Basis für einen Vergleich mit einem anderen Oberflächenabschnitt eines Maschinenteils einer Komponente (C, D, E, F) heranzuziehen.

14. Landwirtschaftliche Arbeitsmaschine nach Anspruch 12 oder 13, **dadurch gekennzeichnet, dass** die Bildverarbeitungseinheit (13) konfiguriert ist, durch einen Vergleich einer Region (A, B, G, H) mit einer oder mehreren Referenzregionen oder einem oder mehreren Referenzoberflächenabschnitten die Gutflussgeschwindigkeit in der Region zu ermitteln, und/oder, dass die Bildverarbeitungseinheit (13) konfiguriert ist, durch einen Vergleich eines Oberflächenabschnitts eines Maschinenteils einer Komponente (C, D, E, F) mit einer oder mehreren Referenzregionen oder einem oder mehreren Referenzoberflächenabschnitten die Geschwindigkeit der diesen Oberflächenabschnitt aufweisenden Komponente (C, D, E, F) zu ermitteln.

15. Landwirtschaftliche Arbeitsmaschine nach einem der Ansprüche 1 bis 14, **dadurch gekennzeichnet, dass** die Bildverarbeitungseinheit konfiguriert ist, mittels des Verfahrens der Geschwindigkeitskennfeldermittlung und/oder mittels des Verfahrens der Linien-Erkennung eine Erntegutaufnahmevorrichtung (7) des Vorsatzgeräts (2) als eine Komponente (C) zu erkennen und unter Heranziehung deren tatsächlicher Drehzahl und durch Vergleich dieser Drehzahl mit der berechneten Geschwindigkeit für den Oberflächenabschnitt des Maschinenteils der Komponente (C) eine Referenzgeschwindigkeit zu bestimmen.

16. Landwirtschaftliche Arbeitsmaschine nach einem der Ansprüche 1 bis 15, **dadurch gekennzeichnet, dass** die Bildverarbeitungseinheit (13) konfiguriert ist, mittels des Verfahrens der Geschwindigkeitskennfeldermittlung und/oder mittels des Verfahrens der Linien-Erkennung eine Region (A) mit dem Feldbestand (5) vor dem Vorsatzgerät (2) oder eine Region (B) mit dem Feldbestand (5) hinter dem Vorsatzgerät (2) zu erkennen und unter Heranziehung der tatsächlichen Fahrgeschwindigkeit der landwirtschaftlichen Arbeitsmaschine (1) und durch Vergleich dieser Fahrgeschwindigkeit mit der berechneten Geschwindigkeit für den Feldbestand (5) der jeweiligen Region (A, B) eine Referenzgeschwindigkeit zu bestimmen.

17. Landwirtschaftliche Arbeitsmaschine nach Anspruch 15 oder 16, **dadurch gekennzeichnet, dass** die Bildverarbeitungseinheit (13) konfiguriert ist, durch einen Vergleich einer mittels des Verfahrens der Geschwindigkeitskennfeldermittlung und/oder mittels des Verfahrens der Linien-Erkennung ermittelten Geschwindigkeit in einer Region (A, B, D, H) oder einer Komponente (C, D, E, F) mit der Referenzgeschwindigkeit die tatsächliche Geschwindigkeit des Ernteguts (4) oder die Geschwindigkeit des Vorsatzgerätes (2) relativ zum Feldbestands (5) in der Region (A, B, D, H) oder die tatsächliche Geschwindigkeit der Komponente (C, D, E, F) zu berechnen.

18. Landwirtschaftliche Arbeitsmaschine nach einem der vorhergehenden Ansprüche, **dadurch gekennzeichnet, dass** das Vorsatzgerät (2) eine Erntegutbergungsanordnung zum Abtrennen und Aufnehmen von Erntegut (4) aus einem Feldbestand (5) ist, die als Komponenten (C, D, E, F) eine Erntegutaufnahmevorrichtung (7), eine dieser nachgeordnete Erntegutschneidvorrichtung (8), eine dieser nachgeordnete Erntegutfördervorrichtung (9), und eine dieser nachgeordnete Ernteguteinzugsvorrichtung (10), aufweist.

19. Landwirtschaftliche Arbeitsmaschine nach einem der vorhergehenden Ansprüche, **dadurch gekennzeichnet, dass** die Geschwindigkeit eines Oberflächenabschnitts eines Maschinenteils der jeweiligen Komponente (C, D, E, F) anhand eines Markers ermittelt wird, wobei der Marker dann den Oberflächenabschnitt bildet, der für die Ermittlung der Geschwindigkeit des Oberflächenabschnitts dieser Komponente (C, D, E, F) sensorisch erfasst wird.

20. Landwirtschaftliche Arbeitsmaschine nach einem der vorhergehenden Ansprüche, **dadurch gekennzeichnet, dass** die Sensoreinheit (12) zur sensorischen Erfassung des Erntegutstroms und/oder des Vorsatzgeräts (2) mindestens einen optischen Sensor, und/oder mindestens einen Lidar-, Radar- und/oder Ultraschallsensor aufweist.

21. Landwirtschaftliche Arbeitsmaschine nach einem der vorhergehenden Ansprüche, **dadurch gekennzeichnet, dass** die Erntegutaufnahmevorrichtung (7) eine Haspel, dass die Erntegutschneidvorrichtung (8) ein Schneidwerktisch und dass die Erntegutfördervorrichtung (9) eine Förderschnecke des Vorsatzgerätes (2) ist.

22. Verfahren zum Betrieb einer landwirtschaftlichen Arbeitsmaschine (1) nach einem der vorhergehenden Ansprüche, mit einem Vorsatzgerät (2) zur Durchführung landwirtschaftlicher Arbeit und mit einer Regelungseinrichtung (11), die zumindest eine Sensoreinheit (12) zur sensorischen Erfassung des Erntegutstroms im und/oder um das Vorsatzgerät (2) und eine Bildverarbeitungseinheit (13) zur Verarbeitung von Bildern (14), die von der Sensoreinheit (12) basierend auf dem sensorisch erfassten Erntegutstrom erzeugt werden, aufweist, wobei die Bildverarbeitungseinheit (13) konfiguriert ist, zur Ermittlung der Regionen (A, B, G, H) und/oder Komponenten (C, D, E, F) und/oder Eigenschaften des Erntegutstroms, basierend auf den von der Sensoreinheit (12) erzeugten Bildern (14),
- ein Verfahren der Geschwindigkeitskennfeldermittlung anzuwenden und/ oder
- ein Verfahren der Linien-Erkennung anzuwenden
**dadurch gekennzeichnet,**
**dass** die Regelungseinrichtung (11)
- Regionen (A, B, G, H) gleicher Charakteristik,
- Komponenten (C, D, E, F) des Vorsatzgeräts (2) und
- Eigenschaften des Erntegutstroms
erkennt und darauf basierend Prozessabläufe in der landwirtschaftlichen Arbeitsmaschine (1) steuert und/oder regelt, wobei mittels des Verfahrens der Geschwindigkeitskennfeldermittlung und/oder des Verfahrens der Linien-Erkennung, unter Anwendung mindestens eines Farbfilters, eine Objekt-Detektion durchgeführt wird, dass die Objekt-Detektion eine Unterscheidung von Biomasse einerseits und mechanischen Objekten andererseits umfasst, und/oder, dass die Objekt-Detektion eine Unterscheidung einer oder mehrerer Regionen (A, B, G, H) einerseits und eines oder mehrerer Oberflächenabschnitte von Maschinenteilen der Komponenten (C, D, E, F) andererseits umfasst.

## Claims

1. An agricultural working machine with a front attachment (2) for carrying out agricultural work and with a control device (11) which has at least one sensor unit (12) configured for sensory detection of a flow of harvested material in and/or around the front attachment (2) and an image processing unit (13) for processing images (14) which are produced by the sensor unit (12) based on the sensorially detected flow of harvested material, wherein the control device (11) is configured to identify
- regions (A, B, G, H) with the same characteristics,
- components (C, D, E, F) of the front attachment (2), and
- properties of the flow of harvested material and is configured to use each identified item in order to control and/or regulate process sequences in the agricultural working machine (1), wherein the image processing unit (13) is configured
- to use a velocity characteristic map determination method and/or
- to use a line detection method
for the determination of the regions (A, B, G, H) and/or components (C, D, E, F) and/or properties of the flow of harvested material, based on the images produced by the sensor unit (12),
**characterized in that**
an object detection is carried out by means of the velocity characteristic map determination method and/or the line detection method, with the use of at least one colour filter, **in that** the object detection comprises distinguishing between biomass on the one hand from mechanical objects on the other hand, and/or **in that** the object detection comprises distinguishing between one or more regions (A, B, G, H) on the one hand and one or more surface sections of machine parts of the components (C, D, E, F) on the other hand.

2. The agricultural working machine according to claim 1, **characterized in that** the image processing unit (13) is configured
- to determine the field crop (5) in front of the front attachment (2) as a region (A) and to identify it as the field crop (5) in front of the front attachment (2), and/or
- to determine the field crop (5) behind the front attachment (2) as a region (B) and to identify it as the field crop (5) behind the front attachment (2), and/or
- to determine a harvested material pickup device (7) of the front attachment (2) as a component (C) and to identify it as the harvested material pickup device (7), and/or
- to determine a harvested material cutting device (8) of the front attachment (2) as a component (D) and to identify it as the harvested material cutting device (8), and/or
- to determine a harvested material feeder device (9) of the front attachment (2) as a component (E) and to identify it as the harvested material feeder device (9), and/or
- to determine a harvested material intake device (10) of the front attachment (2) as a component (F) and to identify it as the harvested material intake device (10),
- to determine the flow of harvested material inside the harvested material pickup device (7) as a region (G) and to identify it as the flow of harvested material inside the harvested material pickup device (7), and/or
- to determine the flow of harvested material vertically above the harvested material cutting device (8) of the front attachment (2) as a region (H) and to identify it as the flow of harvested material vertically above the harvested material cutting device (8).

3. The agricultural working machine according to claim 2, **characterized in that** in order to identify a respective determined region (A, B, G, H) or a respective determined component (C, D, E, F), the image processing unit is configured to compare identification data associated with the respective region (A, B, G, H) or with the respective component (C, D, E, F) which characterize them and which are stored in the image processing unit (13).

4. The agricultural working machine according to one of claims 1 to 3, **characterized in that** the image processing unit (13) is configured to generate a velocity characteristic map which comprises material flow velocities and/or velocities of surface sections of machine parts of the components (C, D, E, F) of the front attachment (2) with the velocity characteristic map determination method based on the images (14) generated by the sensor unit (12).

5. The agricultural working machine according to one of claims 1 to 4, **characterized in that** in order to generate the velocity characteristic map, the image processing unit (13) is configured in a manner such that it respectively groups two consecutive images (14) of an image sequence produced by the sensor unit (12) to form an image pair, wherein a time interval between the images (14) of the respective image pair is detected and/or specified by the image processing unit (13) and wherein each image (14) of the respective image pair has an intensity pattern.

6. The agricultural working machine according to claim 5, **characterized in that** in order to generate the velocity characteristic map, the image processing unit (13) is configured to determine positional shifts of the intensity patterns between the images (14) of the respective image pair, wherein the positional shifts comprise shift values and shift directions of the intensity patterns, so that the shift values and shift directions for each image pair are respectively combined as vectors of a vector field for the respective image pair.

7. The agricultural working machine according to claim 6, **characterized in that** the image processing unit (13) is configured to calculate velocities from the shift values of the intensity patterns between the images (14) of the respective image pair and the time interval between the images (14) of the respective image pair, so that the velocities are the material flow velocities of the flow of harvested material and/or the velocities of the surface sections of the machine parts of the components (C, D, E, F) of the front attachment (2).

8. The agricultural working machine according to one of claims 1 to 7, **characterized in that** the image processing unit (13) is configured to initially produce an edge image for the respective image (14) using the line detection method based on the images (14) produced by the sensor unit (12) and to determine straight lines in the edge image based on the respective edge image, so that the Canny algorithm is used to generate the edge image and/or the Hough transformation is used to determine the straight lines.

9. The agricultural working machine according to claim 8, **characterized in that** the image processing unit (13) is configured in a manner such that in the line detection method, it respectively groups two consecutive images (14) of an image sequence generated by the sensor unit (12) to form an image pair, wherein a time interval between the images (14) of the respective image pair is detected and/or specified by the image processing unit (13), and wherein each image (14) of the respective image pair has a line pattern produced from one or more straight lines.

10. The agricultural working machine according to claim 9, **characterized in that** the image processing unit (13) is configured in a manner such that in the line detection method, it determines positional shifts of the line patterns between the images (14) of the respective image pair, wherein the positional shifts comprise shift values and in particular shift directions of the line patterns, preferably **in that** the shift values and shift directions for each image pair are respectively combined as vectors of a vector field of the respective image pair.

11. The agricultural working machine according to claim 10, **characterized in that** the image processing unit (13) is configured to calculate velocities from the shift values of the line patterns between the images (14) of the respective image pair and the time interval between the images (14) of the respective image pair, preferably **in that** the velocities are the velocities of the surface sections of the machine parts of the components (C, D, E, F) of the front attachment (2), and/or **in that** a velocity is the velocity of a surface section of a machine part of the harvested material pickup device (7).

12. The agricultural working machine according to one of the preceding claims, **characterized in that** the image processing unit (13) is configured to specify one or more regions (A, B, G, H) as a respective reference region, and/or **in that** the image processing unit (13) is configured to specify one or more surface sections of machine parts of the components (C, D, E, F) as a respective reference surface section.

13. The agricultural working machine according to claim 12, **characterized in that** the image processing unit (13) is configured to use one or more reference regions and/or one or more reference surface sections as the basis for a comparison with another region (A, B, G, H), and/or **in that** the image processing unit (13) is configured to use one or more reference regions and/or one or more reference surface sections as the basis for a comparison with another surface section of a machine part of a component (C, D, E, F).

14. The agricultural working machine according to claim 12 or claim 13, **characterized in that** the image processing unit (13) is configured to determine the material flow velocity in a region by comparing the region (A, B, G, H) with one or more reference regions or with one or more reference surface sections, and/or **in that** the image processing unit (13) is configured, by comparing a surface section of a machine part of a component (C, D, E, F) with one or more reference regions or one or more reference surface sections, to determine the velocity of these components (C, D, E, F) having this surface section.

15. The agricultural working machine according to one of claims 1 to 14, **characterized in that** the image processing unit is configured to detect a harvested material pickup device (7) of the front attachment (2) as a component (C) by means of the velocity characteristic map determination method and/or by means of the line detection method and to determine a reference velocity by using its actual rotational speed and by comparing this rotational speed with the calculated velocity for the surface section of the machine part of the component (C).

16. The agricultural working machine according to one of claims 1 to 15, **characterized in that** the image processing unit (13) is configured to detect a region (A) with the field crop (5) in front of the front attachment (2) or a region (B) with the field crop (5) behind the front attachment (2) by means of the velocity characteristic map determination method and/or by means of the line detection method and to determine a reference velocity by using the actual driving speed of the agricultural working machine (1) and by comparing this driving speed with the calculated velocity for the field crop (5) of the respective region (A, B).

17. The agricultural working machine according to claim 15 or claim 16, **characterized in that**, by comparing a velocity in a region (A, B, D, H) or of a component (C, D, E, F), determined by means of the velocity characteristic map determination method and/or by means of the line detection method with the reference velocity, the image processing system (13) is configured to determine the actual velocity of the harvested material (4) or the velocity of the front attachment (2) relative to the field crop (5) in the region (A, B, D, H) or the actual velocity of the components (C, D, E, F).

18. The agricultural working machine according to one of the preceding claims, **characterized in that** the front attachment (2) is a harvested material recovery assembly for separating and picking up harvested material (4) from a field crop (5) and, as components (C, D, E, F), has a harvested material pickup device (7), a harvested material cutting device (8) downstream thereof, a harvested material feeder device (9) downstream thereof, and a harvested material intake device (10) downstream thereof.

19. The agricultural working machine according to one of the preceding claims, **characterized in that** the velocity of a surface section of a machine part of the respective component (C, D, E, F) is determined with the aid of a marker, wherein the marker then forms the surface section which is sensorially detected for the determination of the velocity of the surface section of this component (C, D, E, F).

20. The agricultural working machine according to one of the preceding claims, **characterized in that** the sensor unit (12) has at least one optical sensor and/or at least one Lidar sensor, radar sensor and/or ultrasound sensor for the sensory detection of the flow of harvested material and/or the front attachment (2).

21. The agricultural working machine according to one of the preceding claims, **characterized in that** the harvested material pickup device (7) is a reel, **in that** the harvested material cutting device (8) is a cutter table and **in that** the harvested material feeder device (9) is a feeding auger of the front attachment (2).

22. A method for operating an agricultural working machine (1) according to one of the preceding claims, with a front attachment (2) for carrying out agricultural work and with a control device (11) which has at least one sensor unit (12) for the sensory detection of a flow of harvested material in and/or around the front attachment (2), and an image processing unit (13) for processing images (14) which are generated by the sensor unit (12) based on the flow of sensorially detected harvested material, wherein the image processing unit (13) is configured
- to use a velocity characteristic map determination method and/or
- to use a line detection method
in order to determine the regions (A, B, G, H) and/or components (C, D, E, F) and/or properties of the flow of harvested material based on the images (14) generated by the sensor unit (12),
**characterized in that**
the control device (11) identifies
- regions (A, B, G, H) with the same characteristics,
- components (C, D, E, F) of the front attachment (2), and
- properties of the flow of harvested material and on the basis thereof, controls and/or regulates process sequences in the agricultural working machine (1), wherein an object detection is carried out by means of the velocity characteristic map determination method and/or the line detection method, with the use of at least one colour filter, **in that** the object detection comprises distinguishing between biomass on the one hand and mechanical objects on the other hand, and/or **in that** the object detection comprises distinguishing between one or more regions (A, B, G, H) on the one hand and one or more surface sections of machine parts of the components (C, D, E, F) on the other hand.

## Revendications

1. Machine de travail agricole comprenant un outil frontal (2) pour réaliser un travail agricole et comprenant un équipement de régulation (11) qui comporte au moins une unité de capteurs (12) pour la détection par capteurs d'un flux de produit récolté dans et/ou autour de l'outil frontal (2) et une unité de traitement d'images (13) pour le traitement d'images (14) qui sont générées par l'unité de capteurs (12) sur la base du flux de produit récolté détecté par capteurs, l'équipement de régulation (11) étant configuré pour reconnaître
- des zones (A, B, G, H) de même caractéristique,
- des composants (C, D, E, F) de l'outil frontal (2) et
- des propriétés du flux de produit récolté, et étant configuré pour utiliser ce qui a été respectivement reconnu pour commander et/ou pour réguler des déroulements de processus dans la machine de travail agricole (1), l'unité de traitement d'images (13) étant configurée pour déterminer les zones (A, B, G, H) et/ou composants (C, D, E, F) et/ou propriétés du flux de produit récolté, sur la base des images (14) générées par l'unité de capteurs (12),
- pour appliquer un procédé de détermination de diagrammes caractéristiques de vitesse et/ou
- pour appliquer un procédé de reconnaissance de lignes,
**caractérisée en ce que**
une détection d'objets est réalisée au moyen du procédé de détermination de diagrammes caractéristiques de vitesse et/ou du procédé de reconnaissance de lignes, en utilisant au moins un filtre de couleur, **en ce que** la détection d'objets inclut une distinction de la biomasse d'une part et d'objets mécaniques d'autre part, **en ce que** la détection d'objets inclut une distinction d'une ou plusieurs zones (A, B, G, H) d'une part et d'une ou plusieurs portions de surface de parties mécaniques des composants (C, D, E, F) d'autre part.

2. Machine de travail agricole selon la revendication 1, **caractérisée en ce que** l'unité de traitement d'images (13) est configurée
- pour déterminer la culture en champ (5) devant l'outil frontal (2) comme une zone (A) et pour l'identifier comme culture en champ (5) devant l'outil frontal (2) et/ou
- pour déterminer la culture en champ (5) derrière l'outil frontal (2) comme une zone (B) et pour l'identifier comme culture en champ (5) derrière l'outil frontal (2) et/ou
- pour déterminer un dispositif de réception de produit récolté (7) de l'outil frontal (2) comme un composant (C) et pour l'identifier comme dispositif de réception de produit récolté (7) et/ou
- pour déterminer un dispositif de coupe de produit récolté (8) de l'outil frontal (2) comme composant (D) et pour l'identifier comme dispositif de coupe de produit récolté (8) et/ou
- pour déterminer un dispositif de convoyage de produit récolté (9) de l'outil frontal (2) comme composant (E) et pour l'identifier comme dispositif de convoyage de produit récolté (9) et/ou
- pour déterminer un dispositif d'amenée de produit récolté (10) de l'outil frontal (2) comme composant (F) et pour l'identifier comme dispositif d'amenée de produit récolté (10),
- pour déterminer le flux de produit récolté à l'intérieur du dispositif de réception de produit récolté (7) comme une zone (G) et pour l'identifier comme flux de produit récolté à l'intérieur du dispositif de réception de produit récolté (7) et/ou
- pour déterminer le flux de produit récolté verticalement au-dessus du dispositif de coupe de produit récolté (8) de l'outil frontal (2) comme une zone (H) et pour l'identifier comme flux de produit récolté verticalement au-dessus du dispositif de coupe de produit récolté (8).

3. Machine de travail agricole selon la revendication 2, **caractérisée en ce que** l'unité de traitement d'images est configurée pour comparer, aux fins d'identification, une zone respectivement déterminée (A, B, G, H) ou un composant respectivement déterminé (C, D, E, F) avec des données d'identification associées à la zone respective (A, B, G, H) ou au composant respectif (C, D, E, F) qui les caractérisent et qui sont mémorisées dans l'unité de traitement d'images (13).

4. Machine de travail agricole selon une des revendications 1 à 3, **caractérisée en ce que** l'unité de traitement d'images (13) est configurée pour générer, dans le cas du procédé de détermination de diagrammes caractéristiques de vitesse, sur la base d'images (14) générées par l'unité de capteurs (12), un diagramme caractéristique de vitesses qui comporte des vitesses d'écoulement de produit et/ou des vitesses de portions de surface de parties mécaniques des composants (C, D, E, F) de l'outil frontal (2).

5. Machine de travail agricole selon une des revendications 1 à 4, **caractérisée en ce que**, pour établir le diagramme caractéristique de vitesses, l'unité de traitement d'images (13) est configurée de façon qu'elle groupe respectivement deux images successives (14) d'une séquence d'images générées par l'unité de capteurs (12) en une paire d'images, un intervalle de temps entre les images (14) de la paire d'images respective étant détecté et/ou prescrit par l'unité de traitement d'images (13), et chaque image (14) de la paire d'images respective comportant un motif d'intensité.

6. Machine de travail agricole selon la revendication 5, **caractérisée en ce que**, pour établir le diagramme caractéristique de vitesses, l'unité de traitement d'images (13) est configurée de façon qu'elle détermine des déplacements positionnels des motifs d'intensité entre les images (14) de la paire d'images respective, les déplacements positionnels incluant des valeurs de déplacement et des directions de déplacement des motifs d'intensité, **en ce que** les valeurs de déplacement et les directions de déplacement pour chaque paire d'images sont respectivement réunies comme vecteurs d'un champ vectoriel de la paire d'images respective.

7. Machine de travail agricole selon la revendication 6, **caractérisée en ce que** l'unité de traitement d'images (13) est configurée pour calculer des vitesses à partir des valeurs de déplacement des motifs d'intensité entre les images (14) de la paire d'images respective et de l'intervalle de temps entre les images (14) de la paire d'images respective, **en ce que** les vitesses sont les vitesses d'écoulement de produit du flux de produit récolté et/ou les vitesses des portions de surface des parties mécaniques des composants (C, D, E, F) de l'outil frontal (2).

8. Machine de travail agricole selon une des revendications 1 à 7, **caractérisée en ce que** l'unité de traitement d'images (13) est configurée, dans le cas du procédé de reconnaissance de lignes, sur la base des images (14) générées par l'unité de capteurs (12), pour générer une image de bord d'abord pour l'image respective (14) et, sur la base sur l'image de bord respective, pour déterminer des lignes droites dans l'image de bord, **en ce que**, pour générer l'image de bord, l'algorithme de Canny et/ou, pour déterminer les lignes droites, la transformation de Hough sont utilisés.

9. Machine de travail agricole selon la revendication 8, **caractérisée en ce que** l'unité de traitement d'images (13) est configurée de façon que, dans le cas du procédé de reconnaissance de lignes, respectivement deux images successives (14) d'une séquence d'images générées par l'unité de capteurs (12) sont groupées en une paire d'images, un intervalle de temps entre les images (14) de la paire d'images respective étant détecté et/ou prescrit par l'unité de traitement d'images (13), et chaque image (14) de la paire d'images respective comportant un motif de lignes constitué par une ou plusieurs lignes droites.

10. Machine de travail agricole selon la revendication 9, **caractérisée en ce que** l'unité de traitement d'images (13) est configurée de façon que, dans le cas du procédé de reconnaissance de lignes, des déplacements positionnels des motifs de lignes entre les images (14) de la paire d'images respective sont déterminés, les déplacements positionnels incluant des valeurs de déplacement et en particulier des directions de déplacement des motifs de lignes, préférentiellement **en ce que** les valeurs de déplacement et les directions de déplacement pour chaque paire d'images sont respectivement réunies comme vecteurs d'un champ vectoriel de la paire d'images respective.

11. Machine de travail agricole selon la revendication 10, **caractérisée en ce que** l'unité de traitement d'images (13) est configurée pour calculer des vitesses à partir des valeurs de déplacement des motifs de lignes entre les images (14) de la paire d'images respective et de l'intervalle de temps entre les images (14) de la paire d'images respective, préférentiellement **en ce que** les vitesses sont les vitesses des portions de surface des parties mécaniques des composants (C, D, E, F) de l'outil frontal (2), et/ou **en ce qu'**une vitesse est la vitesse d'une portion de surface d'une partie mécanique du dispositif de réception de produit récolté (7).

12. Machine de travail agricole selon une des revendications précédentes, **caractérisée en ce que** l'unité de traitement d'images (13) est configurée pour prescrire une ou plusieurs zones (A, B, G, H) respectivement comme zone de référence, et/ou **en ce que** l'unité de traitement d'images (13) est configurée pour prescrire une ou plusieurs portions de surface de parties mécaniques des composants (C, D, E, F) respectivement comme portion de surface de référence.

13. Machine de travail agricole selon la revendication 12, **caractérisée en ce que** l'unité de traitement d'images (13) est configurée pour prendre une ou plusieurs zones de référence et/ou une ou plusieurs portions de surface de référence comme base pour une comparaison avec une autre zone (A, B, G, H), et/ou **en ce que** l'unité de traitement d'images (13) est configurée pour prendre une ou plusieurs zones de référence et/ou une ou plusieurs portions de surface de référence comme base pour une comparaison avec une autre portion de surface d'une partie mécanique d'un composant (C, D, E, F).

14. Machine de travail agricole selon la revendication 12 ou 13, **caractérisée en ce que**, par l'intermédiaire d'une comparaison d'une zone (A, B, G, H) avec une ou plusieurs zones de référence ou avec une ou plusieurs portions de surface de référence, l'unité de traitement d'images (13) est configurée pour déterminer la vitesse d'écoulement de produit dans la zone, et/ou **en ce que**, par l'intermédiaire d'une comparaison d'une portion de surface d'une partie mécanique d'un composant (C, D, E, F) avec une ou plusieurs zones de référence ou avec une ou plusieurs portions de surface de référence, l'unité de traitement d'images (13) est configurée pour déterminer la vitesse des composants (C, D, E, F) comportant cette portion de surface.

15. Machine de travail agricole selon une des revendications 1 à 14, **caractérisée en ce que**, au moyen du procédé de détermination de diagrammes caractéristiques de vitesse et/ou au moyen du procédé de reconnaissance de lignes, l'unité de traitement d'images est configurée pour reconnaître un dispositif de réception de produit récolté (7) de l'outil frontal (2) comme un composant (C) et pour déterminer une vitesse de référence en prenant la vitesse de rotation réelle de celui-ci et en comparant cette vitesse de rotation avec la vitesse calculée pour la portion de surface de la partie mécanique du composant (C).

16. Machine de travail agricole selon une des revendications 1 à 15, **caractérisée en ce que**, au moyen du procédé de détermination de diagrammes caractéristiques de vitesse et/ou au moyen du procédé de reconnaissance de lignes, l'unité de traitement d'images (13) est configurée pour reconnaître une zone (A) avec la culture en champ (5) devant l'outil frontal (2) ou une zone (B) avec la culture en champ (5) derrière l'outil frontal (2) et pour déterminer une vitesse de référence en prenant la vitesse de marche réelle de la machine de travail agricole (1) et en comparant cette vitesse de marche à la vitesse calculée pour la culture en champ (5) de la zone respective (A, B).

17. Machine de travail agricole selon la revendication 15 ou 16, **caractérisée en ce que** l'unité de traitement d'images (13) est configurée pour calculer la vitesse réelle du produit récolté (4) ou la vitesse de l'outil frontal (2) par rapport à la culture en champ (5) dans la zone (A, B, D, H) ou la vitesse réelle du composant (C, D, E, F) en comparant une vitesse déterminée au moyen du procédé de détermination de diagrammes caractéristiques de vitesse et/ou au moyen du procédé de reconnaissance de lignes dans une zone (A, B, D, H) ou un composant (C, D, E, F) avec la vitesse de référence.

18. Machine de travail agricole selon une des revendications précédentes, **caractérisée en ce que** l'outil frontal (2) est un agencement de collecte de produit récolté pour séparer et ramasser du produit récolté (4) à partir de la culture en champ (5), lequel comporte comme composants (C, D, E, F) un dispositif de réception de produit récolté (7), un dispositif de coupe de produit récolté (8) disposé en aval de ce dernier, un dispositif de convoyage de produit récolté (9) disposé en aval de ce dernier et un dispositif d'amenée de produit récolté (10) disposé en aval de ce dernier.

19. Machine de travail agricole selon une des revendications précédentes, **caractérisée en ce que** la vitesse d'une portion de surface d'une partie mécanique du composant respectif (C, D, E, F) est déterminée à l'aide d'un marqueur, le marqueur formant alors la portion de surface qui est détectée par capteurs pour déterminer la vitesse de la portion de surface de ce composant (C, D, E, F).

20. Machine de travail agricole selon une des revendications précédentes, **caractérisée en ce que**, pour la détection par capteurs du flux de produit récolté et/ou de l'outil frontal (2), l'unité de capteurs (12) comporte au moins un capteur optique et/ou au moins un capteur lidar, radar et/ou ultrasons.

21. Machine de travail agricole selon une des revendications précédentes, **caractérisée en ce que** le dispositif de réception de produit récolté (7) est un rabatteur, **en ce que** le dispositif de coupe de produit récolté (8) est une rallonge de tablier de coupe, et **en ce que** le dispositif de convoyage de produit récolté (9) est une vis d'amenée de l'outil frontal (2).

22. Procédé de fonctionnement d'une machine de travail agricole (1) selon une des revendications précédentes, comprenant un outil frontal (2) pour réaliser un travail agricole et comprenant un équipement de régulation (11) qui comporte au moins une unité de capteurs (12) pour la détection par capteurs du flux de produit récolté dans et/ou autour de l'outil frontal (2) et une unité de traitement d'images (13) pour le traitement d'images (14) qui sont générées par l'unité de capteurs (12) sur la base du flux de produit récolté détecté par capteurs, l'unité de traitement d'images (13) étant configurée, aux fins de reconnaître les zones (A, B, G, H) et/ou composants (C, D, E, F) et/ou propriétés du flux de produit récolté, pour appliquer, sur la base des images (14) générées par l'unité de capteurs (12),
- un procédé de détermination de diagrammes caractéristiques de vitesse et/ou
- un procédé de reconnaissance de lignes,
**caractérisé en ce que**
l'équipement de régulation (11) reconnaît
- des zones (A, B, G, H) de même caractéristique,
- des composants (C, D, E, F) de l'outil frontal (2) et
- des propriétés du flux de produit récolté et, sur ces bases, commande et/ou régule des déroulements de processus dans la machine de travail agricole (1), une détection d'objets étant réalisée au moyen du procédé de détermination de diagrammes caractéristiques de vitesse et/ou du procédé de reconnaissance de lignes, en utilisant au moins un filtre de couleur, **en ce que** la détection d'objets inclut une distinction de la biomasse d'une part et d'objets mécaniques d'autre part, **en ce que** la détection d'objets inclut une distinction d'une ou plusieurs zones (A, B, G, H) d'une part et d'une ou plusieurs portions de surface de parties mécaniques des composants (C, D, E, F) d'autre part.
